(19) Europäisches Patentamt
European Patent Office
Office européen des brevets

(11) **EP 4 465 090 A1**

(12) **EUROPÄISCHE PATENTANMELDUNG**

(43) Veröffentlichungstag:
**20.11.2024   Patentblatt 2024/47**

(51) Internationale Patentklassifikation (IPC):
**G01S 13/90** (2006.01)

(21) Anmeldenummer: **24175895.2**

(52) Gemeinsame Patentklassifikation (CPC):
**G01S 13/9023**

(22) Anmeldetag: **15.05.2024**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **16.05.2023   AT 503822023**
**03.08.2023   AT 506252023**

(71) Anmelder: **AIT Austrian Institute of Technology GmbH**
**1210 Wien (AT)**

(72) Erfinder:
• **KWAPISZ, Maciej**
  **2640 Enzenreith (AT)**
• **VORWAGNER, Alois**
  **1200 Wien (AT)**
• **LEOPOLD, Philip**
  **1170 Wien (AT)**

(74) Vertreter: **Wildhack & Jellinek Patentanwälte GmbH**
**Landstraßer Hauptstraße 50**
**1030 Wien (AT)**

(54) **VERFAHREN ZUR ERMITTLUNG DER RELATIVEN VERTIKALVERFORMUNG EINES ZU UNTERSUCHENDEN OBJEKTS**

(57) Verfahren zur Ermittlung der relativen Vertikalverformung $\Delta d_{up}$ eines zu untersuchenden Objekts (Ob), insbesondere eines Bauwerks, vorzugsweise einer Brücke, innerhalb einer Zeitspanne zwischen zeitlich aufeinanderfolgenden Aufnahmezeitpunkten ($t_1$, $t_2$) basierend auf von zumindest einem Flugobjekt gemessenen Interferometrie Synthetic Aperture Radar (InSAR-)Daten,
- wobei sich das zumindest eine Flugobjekt auf einer Flugbahn in einer Flugrichtung wiederholt in zeitlichem Abstand über das zu untersuchende Objekt (Ob) bewegt und währenddessen entlang einer Blickrichtung (LOS) InSAR-Daten aufnimmt,
- wobei basierend auf den aufgenommenen InSAR-Daten Interferogramme erstellt werden, und
- wobei zumindest zwei Persistent Scatterer (PS-)Punkte ($P_1$, $P_2$) auf dem zu untersuchenden Objekt (Ob) als Pixel ermittelt werden, die über eine Folge von Interferogrammen kohärent bleiben,
umfassend die folgenden Schritte:
- Ermitteln der Veränderung der Phase in Blickrichtung (LOS) mit dem zugehörigen Einfallswinkel $\theta_i$ zwischen der Blickrichtung (LOS) und der Nadirrichtung (Nad) und dem zugehörigen Winkel $\alpha_{ALD}$ zwischen der auf eine horizontale Fläche projizierten Blickrichtung (LOS) und der geographischen Nordrichtung (N) für die zumindest zwei PS-Punkte auf dem zu untersuchenden Objekt (Ob) basierend auf zu zumindest zwei Aufnahmezeitpunkten ($t_1$, $t_2$) erstellten Interferogrammen,
- Ableiten der differenziellen Verformungsänderung $\Delta d_{LOS}$ des zu untersuchenden Objekts (Ob) in der Blickrichtung (LOS) des Flugobjekts zwischen den Aufnahmezeitpunkten ($t_1$, $t_2$) basierend auf der ermittelten Veränderung der Phase, insbesondere nach Korrektur von Fehlern bedingt durch Phasensprünge,
- Durchführen einer Koordinatentransformation der differenziellen Verformungsänderung $\Delta D_{LOS}$ in die Richtung des zu untersuchenden Objekts (Ob), wobei die horizontalen Bewegungskomponenten ($\Delta d_E$, $\Delta d_N$) der differenziellen Verformungsänderung $\Delta d_{LOS}$ auf die Längs- und die Querrichtung des zu untersuchenden Objekts (Ob) projiziert werden, insbesondere unter Heranziehung des Winkel $\alpha_{Ob}$ zwischen der auf eine horizontale Fläche projizierten Längsachse des Objekts und der geographischen Nordrichtung,
- Ermittlung der Temperatur, insbesondere der Temperatur des zu untersuchenden Objekts (Ob), insbesondere als Schätzwert und/oder durch Messung,
- Ermittlung der zwischen den Aufnahmezeitpunkten ($t_1$, $t_2$) aufgetretenen relativen Differenzverformung $\Delta d_{Long}$ in Längsrichtung des zu untersuchenden Objekts (Ob) zwischen den, den PS-Punkten entsprechenden, Betrachtungspunkten ($P_1$, $P_2$) auf dem zu untersuchenden Objekt (Ob) unter Berücksichtigung der ermittelten Temperatur, und
- Berechnung der relativen Vertikalverformung $\Delta d_{up}$ des zu untersuchenden Objekts (Ob) zwischen den

EP 4 465 090 A1

Aufnahmezeitpunkten ($t_1$, $t_2$) unter Heranziehung der zuvor ermittelten relativen Differenzverformung $\Delta d_{Long}$ in Längsrichtung und der differenziellen Verformungsänderung $\Delta D_{LOS}$.

Fig. 1

**Beschreibung**

Die Erfindung betrifft ein Verfahren zur Ermittlung der relativen Vertikalverformung $\Delta d_{Up}$ eines zu untersuchenden Objekts, insbesondere eines Bauwerks, vorzugweise einer Brücke, innerhalb einer Zeitspanne zwischen zeitlich aufeinanderfolgenden Aufnahmezeitpunkten basierend auf von zumindest einem Flugobjekt gemessenen Interferometric Synthetic Aperture Radar (InSAR-)Daten gemäß Patentanspruch 1.

Im Folgenden beziehen sich in eckigen Klammern [ ] angeführte Ziffern auf das Literaturverzeichnis am Ende der Beschreibung.

Aus dem Stand der Technik sind verschiedenste Methoden zur Zustandserfassung von Bauwerken bekannt. Bis heute wird der Zustand von Brücken hauptsächlich periodisch durch Sichtprüfungen erfasst, wobei in Österreich die Vorgangsweise nach RVS 13.03.11 [1] erfolgt. Messtechnische Untersuchungen werden in der Regel als Ergänzung zur visuellen Inspektion durchgeführt. In besonderen Fällen "Sonderprüfungen" werden Dauerüberwachungssysteme eingesetzt. Die dafür vorhandenen Ansätze lassen sich in vier Gruppen zusammenfassen:

- Erkennung von abweichendem Verhalten
- System- oder Schadenserkennung
- Überwachung von Auswirkungen
- Schwellenwertüberwachung

Sensorbasierte Messmethoden erfassen die mechanische Strukturreaktion wie Verformung, Neigung, Dehnung usw. über die Zeit. Veränderungen im Verhalten dieser Reaktionen können als Ursache materialbedingte Gründe (z.B. Materialkriechen, Setzungen), Veränderung in der Belastung oder auch Änderungen des Steifigkeitsverhaltens haben (z.B. Steifigkeitsabnahme bei Schadensbildung). Ebenso können Änderung des statischen Systems (z.B. Auflagerabsenkung bei statisch unbestimmten Systemen) auftreten. Verlässliche Rückschlüsse können bei bekannten Eingangsgrößen (z.B. Erfassen der Belastung) gezogen werden, andernfalls müssen für Interpretation der Messdaten und Zustandserfassung die Reaktionen mit Prognosen aus Modellen gegenübergestellt werden.

Die gebräuchlichste Prüfung zur Messung der Verformung ist die Tachymetrische Vermessung (Theodoliten/ Totalstation) oder Nivellement z.B. Brückennivellete. Dabei wird die strukturelle Reaktion des untersuchten Bauwerks auf konstante Lasten (Eigenlasten) oder Änderungen der Durchbiegung, die z. B. durch einen Auslöser wie Materialverhalten, Setzungen oder Belastungsänderungen verursacht werden, festgestellt. Dies geschieht, wenn die Brückenprüfungen Anomalien zeigen oder im Anlassfall, wenn Überlastungen auftreten (z.B. in AT Altersbergbrücke A10-2006 [2]). Die tachymetrische Vermessung orientiert sich entweder an den bestehenden Festpunktfeldern (z.B. Landeskoordinatensystem wie das Österreichische Bundesmeldenetz) zur absoluten Koordinaten Bestimmung, oder bezieht sich auf bekannte Referenzpunkte aus vorherigen Vermessungstätigkeiten. Zweckmäßigerweise wird keine permanente Überwachung durchgeführt, bzw. falls wann nur in Ausnahmefällen erfolgt diese mit am Bauwerk montierten Prismen und vollautomatischen Totalstationen.

Messungen anderer mechanischer Größen wie Neigung, Dehnung und Rissbreite wurden anfangs hauptsächlich bei Probebelastungen (Neubau vor Eröffnung oder bei Sonderprüfungen) mit bekannten Lasten [3, 4] vorgenommen und werden derzeit auch mittels Rissspionen oder im Anlassfall für Sonderprüfungen für die Dauerüberwachung verwendet. Anforderungen an die Messtechnik zur Dauerüberwachung werden für die geotechnische Anwendung derzeit europaweit genormt [7]. In der gerade in Ausarbeitung befindlichen EN_ISO 18674-1 [8] werden beispielsweise Möglichkeiten zur Verschiebung von Messpunkten einschließlich Sonderfällen wie vertikale Verschiebungskomponente (=Setzung oder Hebung) und abgeleitete Parameter, z.B. Kippung und Dehnung aufgezählt. Diese sind: Totalstation (Tachymeter), Nivellierinstrument, elektronisches Entfernungsmessgerät, Laserscanner, GNSS (Differential-GPS), Radar-Interferometrie (Interferenzmessverfahren mit Radar) (InSar, terrestrisch oder satellitengestützt).

Die ständige Beobachtung des Verformungszustands der Bauwerke ist ein potenziell vielversprechender Indikator, aber für eine ständige Überwachung nicht einfach durchzuführen. Es wurden Methoden entwickelt, die versuchen, die Verformung aus Messungen von Neigungssensoren [5] oder aus Beschleunigungssensoren [6] zu bestimmen. Das gebräuchlichste permanente System für vertikale Verschiebungen ist eine flexible digitale Schlauchwage. Es misst direkt die Verformungsdifferenzen und nutzt das Prinzip einer hydrostatischen Setzungsmessung durch an den Bauwerken angebrachte Sensoren. Dabei wird die vertikale Setzung der Sensoren im Verhältnis zu einem Referenzsensor bestimmt. Die Methode eignet sich für die kontinuierliche Überwachung von geotechnischen oder Verformungsproblemen, erfordert jedoch eine ständige Wartung der Sensoren (z. B. Wechsel der Flüssigkeiten...) sowie verbundene Rohre zwischen den Sensoren und sensorbedingte Temperaturkompensation (thermische Expansion der Messflüssigkeit).

Das Forschungsprojekt SIBS [9] - Sicherheitsbewertung von Stützmauern testete verschiedene Möglichkeiten der Verformungsmessung und -bewertung an realen Stützwänden. Die notwendige Unterscheidung zwischen thermischen Verformungen oder jenen, die durch unbekannte Schäden verursacht werden, wurde mit eigens durchgeführten thermischen Versuchen untermauert.

Bauwerksbezogene Temperaturkompensation:

Um verlässliche Aussagen für die Tragsicherheit ableiten zu können, sind hohe Verformungsgenauigkeiten (in der Regel mind. mm-Bereich) notwendig. Um abnormales Strukturverhalten zu erkennen, muss die Temperaturverformung der Struktur kompensiert werden. Aufgrund der Größe der Strukturen und der unterschiedlichen Materialien und Komponenten variiert die Temperatur vor Ort auf der Struktur und bei größeren Bauwerken auch entlang des Objekts (Temperaturfelder resultierend aus Verschattung, Flussquerungen, Talübergänge unterschiedliche Materialien oder Bauteildicken etc...). Instationäre thermische Effekte der betrachteten Materialien bzw. Konstruktionen müssen berücksichtigt werden oder die direkte Bauwerkstemperatur gemessen werden, um Temperaturkompensationsmodelle für eine sensorgestützte Beobachtung bestmöglich zu erstellen [10].

Weiters sind Methoden des satellitengestützten Monitorings (Persistant Scatterer Interferometry) bekannt. Wie schon zuvor erwähnt, ist die Methode der satellitengestützten Radar-Interferometrie nach neuesten Ansätzen gut dafür geeignet, die langfristige Überwachung der Zustände von Objekten, im Speziellen Bauwerken und Brücken, umzusetzen. Im Folgenden wird ein Überblick über bisherige Lösungsansätze dazu gegeben.

Im Folgenden zeigen schematisch:

Fig. 1 eine Darstellung des Grundprinzips der satellitengestützten Radarinterferometrie,
Fig. 2 eine Darstellung der Methode der Persistent Scatterer Interferometrie PSI,
Fig. 3 eine Darstellung der Koordinatentransformation nach [30],
Fig. 4 eine Darstellung der Bildaufnahmen und Winkel und Lagebezeichnung bei Blickrichtung Ost-West nach [31],
Fig. 5 eine Darstellung der Koordinatentransformation von Bodenbewegungsrichtungen bei Verwendung von Messdaten von zwei verschiedenen Orbitalrichtungen.

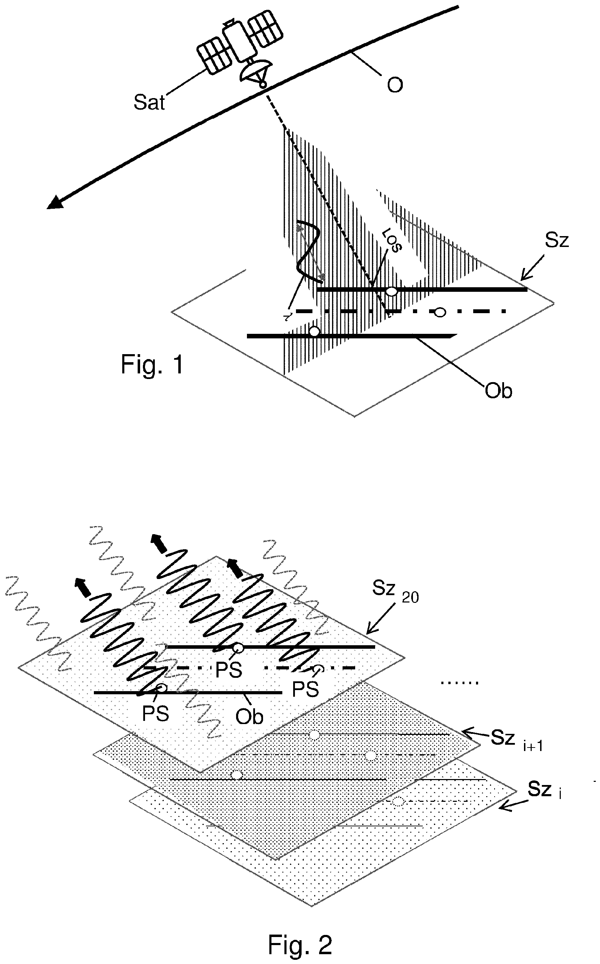

Das Grundprinzip der Methode der satellitengestützten Radarinterferometrie ist in Fig. 1 und Fig. 2 ersichtlich.

Fig. 1 zeigt das Grundprinzip der satellitengestützten Radarinterferometrie: Es erfolgt eine Messung mittels einer oder mehreren, an Satelliten Sat angebrachten, Radarantennen, die für Interferometric Synthetic Aperture Radar (InSAR) geeignet sind. Die Antenennen senden Signale aus, welche nach der Rückstreuung von der Erdoberfläche wieder empfangen werden. Die Satelliten Sat überfliegen die Erdoberfläche entlang ihrer Flugbahn (=Orbit O). Die Messung erfolgt in der Regel rechtsschauend (normal zur Flugrichtung), die Messrichtung (Line of Sight (LOS)) ist in Blickrichtung des Satelliten Sat. Die Satellitenaufnahmen der Erdbeobachtung mit Radarwellen erfolgen demnach in einer schrägen Blickrichtung, rechtsschauend und normal zur Flugrichtung. Bestimmt wird die Interferenzverschiebung des Radarsignals als Bruchteil der Wellenlänge $\lambda$. Damit kann theoretisch eine sehr hohe Genauigkeit erreicht werden. Beispielsweise verwenden die Sentinel 1 Satelliten der ESA Signale (C-Band Frequenz) mit einer Wellenlänge $\lambda = 5{,}5$ cm, Verschiebungen von Bruchteilen dieser Wellenlänge können erfasst werden. Die Verformungsmessung der Erdoberfläche wird bei Überflug in sogenannten Szenen Sz (eine Szene Sz pro Überflug) aufgenommen.

Fig. 2 zeigt eine schematische Darstellung der Methode der Persistent Scatterer Interferometrie PSI. Es werden mehrere Aufnahmen (=Szenen Sz oder SAR Bilder) ausgewertet. Fokus sind diejenigen Pixel, die über mehrere Aufnahmen hinweg kohärent bleiben, und somit als konstante Reflexion über eine Serie von Aufnahmebildern (in der Regel mindestens 20 Szenen Sz) als persistente Scatterer (PS) fungieren. Diese kohärenten Rückstrahler werden als Bezugsgröße verwendet und die Differenz-Verschiebungen ausgewertet.

Die ESA [16] verwendet beispielsweise Forschungssatelliten - Sentinel 1 - welche in einer Flugbahnhöhe von 693 km über der Erdoberfläche kreisen. Die Sentinel-1-Satelliten 1A und 1B überfliegen die Erde auf einer synchronen (ungefähren) polaren Umlaufbahn, welche gegenüber der Erdachse leicht geneigt ist (Neigung 98,18°) [16]. Die Punkte auf der Erdoberfläche werden in zwei Orbitalrichtungen überflogen, einmal von Süden nach Norden (ansteigende Umlaufbahn ASCENDING ASC) und einmal von Norden nach Süden (absteigende Umlaufbahn DESCENDING DSC). Die Sentinel-1-Satelliten 1A und 1B überfliegen die Erde auf einer synchronen (ungefähr) polaren Umlaufbahn. Wobei die Aufnahmen auf der Erde in einer schrägen Blickrichtung- rechtsschauend mit einer Wiederkehrzeit von 6 Tagen im gleichen Orbit. Seit Dezember 2021 ist der Satellit 1B aufgrund eines Sonnensturmes ausgefallen. Damit reduzierte sich die Anzahl der Aufnahmen pro Jahr auf die eines Satelliten: 12 Tagen im gleichen Orbit bzw. alle 6 Tage im gegengleichen Orbit.

Aufgenommen werden die Daten mit einer C-Band Frequenz von einer Wellenlänge von $\lambda = 5{,}5$ cm. Darüber hinaus gibt es einige kommerzielle Anbieter (COSMO-SkyMed, ICESat) bzw. weitere Forschungssatelliten (z.B. Terra SarX), die über InSAR-fähige Radarantennen verfügen.

Die Methode der Persistent Scatterer Interferometry (PSI) ist eine leistungsfähige Analysemethode, die Deformationen auf der Erdoberfläche mit potenziell sehr hoher Genauigkeit bestimmen kann, ohne dass Sensoren an der Oberfläche montiert sind. Im Einzelnen handelt es sich bei PSI um ein differentielles, InSAR (Interfometic Synthetic Aperture Radar)-Radar-Verfahren, bei dem die Eigenschaften der Welleninterferenz zur Ableitung von Messgrößen genutzt werden. Mit Hilfe von PSI lassen sich - durch Vergleich der Phasenwerte korrespondierender Pixel unterschiedlicher Aufnahmezeitpunkte (Szenen) - Distanzunterschiede im Bereich eines Bruchteils der Wellenlänge λ ableiten [11].

Grundsätzlich wird bei der PSI-Methode kein Reflektor vor Ort benötigt, sondern es werden natürliche Rückstrahler (Persistent Scatterer PS) verwendet. Wie in Fig. 2 ersichtlich werden diejenigen Pixel untersucht, die über mehrere Aufnahmen oder Interferogramme hinweg kohärent bleiben (in Fig. 2 angedeutet als weiße Kreise mit schwarzer Umrandung), und somit als kohärente Reflexion über eine Serie von Aufnahmebildern (_Szenen oder SAR-Bilder) als PSI-Punkte fungieren. Dazu wird eine größere Anzahl von Aufnahmebilder (in der Regel mehr als 20) verarbeitet, wodurch eine Zeitreihe der Verformungen sowie die mittlere Offsetrate für den Persistent Scatterer (PS) berechnet werden kann [10]. Diese Auswertung von Zeitreihen wird im Speziellen als "multi-temporal satellite-based differential interferometry" (MTInSAR) bezeichnet [17]. Mit zusätzlich am Beobachtungsobjekt angebrachten Reflektoren (Corner-Reflektoren oder CR) kann die Genauigkeit gesteigert werden, sowie eine bessere Aussage wie eindeutige Punktzuordnung erfolgen.

Lange et al. [1] verwendete in expliziten Forschungsarbeiten Daten des vom Deutschen Zentrum für Luft- und Raumfahrt und Airbus DS betriebenen nicht-kommerziellen hochauflösenden Satelliten TerraSAR-X (TSX), um die Methoden an verschiedenen Strukturen und Gebäuden zu testen. Ein Projekt aus 2019 beobachtet Wasserkraftwerke, aufgenommen mit dem höchstauflösenden Modus, dem so genannten "Staring Spot-Light" mit einer sehr hohen räumlichen Auflösung. Damit konnte gezeigt werden, dass die Genauigkeit im sub-cm-Bereich möglich ist [12]. Auch Staudämme wurden mit Sentinel-1-Daten vermessen und dabei Verschiebungsraten von sub-cm/a ermittelt. Ein weiteres Beispiel, bei dem sich Sentinel-1-Daten als anwendbar erwiesen haben, ist die Erkennung von Erdrutschen, die eine Aktualisierung bestehender Karten von Erdrutschgrenzen und - aktivitäten ermöglicht [13].

Lazecky et al. [14] zeigt in drei Fallstudien (Brücken in Bratislava, Ostrava und Hongkong) das Potenzial für die Überwachung von Verformungen und Bewegungen mit Einbezug von thermischer Dilatation bei Brückenstrukturen. Mit Oberflächentemperaturmessungen und einfachen Zusammenhängen konnte die Genauigkeit wesentlich gesteigert werden. Mit installierten Sensoren gelang eine Zerlegung der SAR-Phasendifferenz in Bezug auf den Referenzpunkt zwischen der Phasenänderung aufgrund von Höhenunterschied und thermischer Ausdehnung. Basierend auf der Eignung des untersuchten Datensatzes und der Annahme der Linearität dieser Parameter wurde eine Korrelation der Temperaturänderungen und der linearen Verformungsrate in der Zeitspanne mit MTInSAR Methoden ausgewertet, wobei hier immer mehrere Orbits zur Lagebestimmung gleichzeitig kombiniert werden müssen.

Selvakumaran et al [15] entwickelte Überlegungen, wie durch eine geeignete statistische Kombination von SAR- und In situ-Messungen nicht erfasste unbekannte Größen aufgeklärt werden könnten, sodass auch die absoluten Bewegungen der Brücke verwendet werden können. Die absolute Verschiebung kann auch nicht mit Verschiebungsmessgeräten auf dem Bauwerk gemessen werden. Bedingt durch die Häufigkeit der Satellitenmessungen und das Rauschen innerhalb der Messungen können eher nur saisonale Trends verfolgt werden, welche damit herkömmliche Inspektionssysteme ergänzen. Hier wird auch explizit auf die Problematik bei Auswertungen unter Kombination mehrerer Orbit-Richtungen hingewiesen. Vor allem dann, wenn die Aufnahmen mit verschiedenen Blickwinkeln an verschiedenen Tagen oder zu verschiedenen Tageszeiten gemacht werden, ist das Bauwerk, z.B die Brücke, einer anderen Temperatur ausgesetzt, was sich auf die thermische Bewegung auswirkt. Eine Möglichkeit der Auswertung ist, nur Punkte bei gleicher Bauwerkstemperatur zu verwenden. Die im Rahmen der erwähnten Arbeit an der Waterloo-Bridge in London durchgeführten Messungen erwiesen sich als vergleichbar, wenn man die relative Bewegung der Punkte entlang der Brücke zueinander verwendet. Verschiedene Belastungsfälle wie Gezeitenbewegungen, Temperaturausdehnung, Verformungen durch Verkehrslasten sowie Schwinden und Kriechen des Betons erschweren die Interpretation.

Nettis et al [17] gibt zusammenfassend einen sehr guten Überblick über Forschungen und ersten Anwendungen von MTInSAR- Methoden in Bezug auf Kompensation von thermischen Bauwerksverformungen, welche folgend nochmals wiedergegeben wird: Eine erste Kategorie von Studien zielt darauf ab, herkömmliche MTInSAR-Algorithmen zur Analyse saisonaler thermischer Verformungen zu modifizieren oder zu erweitern, um sie für eine nahezu kontinuierliche brückenspezifische Überwachung zu nutzen [18, 28]. Diese Studien befassen sich hauptsächlich mit Einzelfallstudien zu hochbelasteten Brücken. Huang et al. [23, 24] und Jung et al. [25] beispielsweise konzentrieren sich auf die Anwendung von MTInSAR-Techniken für Brücken mit großer Spannweite (Stahlfachwerk- bzw. Schrägseilbrücken) in China unter Verwendung von C-Band Sentinel-1- und X-Band COSMO-SkyMed-Radardatensätzen. Die Autoren verwenden diese verschiedenen SAR-Datensätze für die langfristige Überwachung des Zustands von Brücken, indem sie die Signale zerlegen, um vertikale Detektionen und temperaturbedingte Verformungen zu isolieren. Mit dem gleichen Thema befassen sich Cusson et al. [26, 27]. Sie untersuchen das Potenzial der satellitengestützten Interferometrie für die Analyse von temperaturbedingten Verformungen bei niedrigen Geschwindigkeiten (so genannte thermische Sensitivität) für Straßenbrücken in Kanada unter Verwendung von RADARSAT-2-Daten. Die Autoren weisen eine relevante Korrelation zwischen den Zeitreihen der Verschiebungen von PS auf den Brücken und der Umgebungstemperatur nach. Darüber hinaus stellen sie fest, dass Geländer auf einer Brücke zuverlässige Reflektoren sind, die mehrere kohärente PS-Messungen ermöglichen. In [27] beweisen Cusson et al. die Genauigkeit (Fehler kleiner als 0,25 mm°C) über die mit MTInSAR ermittelte thermische Empfindlichkeit von Verschiebungen durch Vergleiche mit einer FEM-Analyse für zwei Fallstudienbrücken, die sich durch unterschiedliche Arten von Überbauten auszeichnen. Außerdem wird ein Frühwarnsystem vorgeschlagen, das beim Überschreiten geeigneter Schwellenwerte für thermische Verformungen Warnungen ausgibt.

Markogiannaki et al. [28] untersuchen anhand einer langgezogenen Fallstudienbrücke in Griechenland, wie MTInSAR zur Unterstützung visueller Brückeninspektionen eingesetzt werden kann. Sie entkoppeln die Verschiebungen aufgrund von temperaturbedingten Effekten und vertikalen Detektionen und stellen eine sich entwickelnde Verformung von 1,8 mm/Jahr bei einem absoluten Wert von 9,5 mm fest, die nach Ansicht der Autoren mit sich entwickelnden Degradationsphänomenen in Verbindung gebracht werden kann, die mit Hilfe von Vor-Ort-Inspektionen bestätigt wurden. Giordano et al. [29] schlagen eine Methode zur Erkennung von Strukturschäden auf der Grundlage von PS-Zeitreihen vor, bei der unerwünschte Verformungen aufgrund von Umweltbedingungen (z.B. temperaturbedingte Verformungen) vernachlässigt werden. Die Wirksamkeit der Methode wird anhand einer Stahlfachwerkbrücke, der Palatino-Brücke in Rom, nachgewiesen, die setzungsbedingten Verformungen unterworfen ist.

Generell jedoch verwenden die bisherigen Ansätze zur Berechnung Messdaten aus beiden Orbitalrichtungen, ASC und DSC. Die über MTInSAR gemessene Schrägdistanzen LOS (Line of SIGHT) werden direkt kombiniert, um die Transformation in vertikale und horizontale Richtung zu ermöglichen. Damit können derzeit bei beispielhafter Überflugrichtung Nord-Süd nur Objekte mit hauptsächlicher Ost-West-Orientierung betrachtet werden. Für Anwendungen an der Erdoberfläche, im Besonderen Hänge und Bodenflächen, ist eine horizontale Verschiebung aufgrund thermischer Änderung unerheblich. Werden jedoch Bauwerke wie Brücken untersucht, ist eine bauwerksspezifische Temperaturkompensation zur Steigerung der Genauigkeit erforderlich. Für eine Temperaturkompensation werden die zugehörigen thermischen Verschiebungen berechnet. Die Ermittlung erfolgt in der Regel aus Modellen, beaufschlagt mit den zugehörigen (gemessene) Temperaturänderungen.

Aus dem Stand der Technik bekannte Umrechnung der Koordinatentransformation:

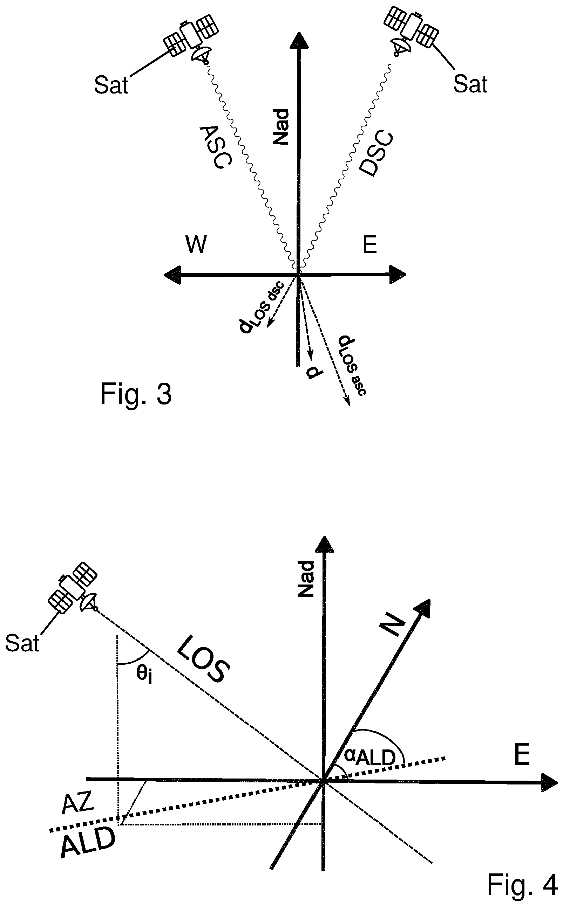

Die Satelliten kreisen in 2 Umlaufbahnen mit zwei Orbitalrichtungen um die Erde (Süd/Nord= ASCENDING ASC und Nord/Süd= DESCENDING DEC) und liefern damit für jeden Orbit bzw. jede Umlaufbahn eine gemessene Veränderung der Phase in Blickrichtung/Messrichtung des Satelliten Line of Sight (LOS), mit dem dazugehörigen Winkel. Die Basis sind interferometrisch bestimmte Phasenunterschiede der Radarsignale (Differenzielle SAR Interferometrie) welche über Zeitreihen verwendet werden. Mit Techniken der Fernerkundung werden diese für jeden Orbit extra vorprozessiert. Die Aufnahmen an der Erdoberfläche werden je nach Orbitalrichtung ASC, DSC zeitlich um mehrere Tage versetzt aufgenommen. Bisherige Ansätze verwenden zur Berechnung einer horizontalen und einer vertikalen Verschiebungskomponente auf der Erdoberfläche die aus beiden Orbitalrichtungen ASC, DSC gemessene Schrägdistanz $d_{LOS\ asc}$, $d_{LOS\ dsc,}$ (siehe Fig. 3).

Fig. 3 zeigt eine schematische Darstellung der aus dem Stand der Technik bekannten Koordinatentransformation nach [30], bei der die Differenzverformungen zwischen den Zeitreihen die zeitliche Entwicklung der Verformung $D_{LOS}$ in Blickrichtung LOS als Verformung nach Osten $d_E$ und als vertikale Verformung $d_{up}$ wiedergeben.

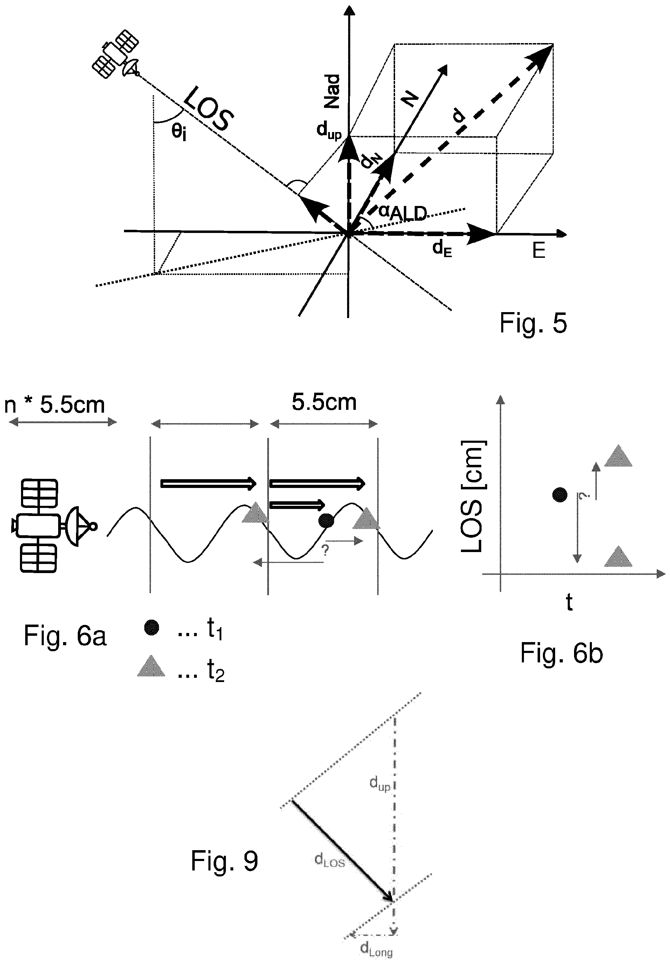

Damit ist die Koordinatentransformation unterbestimmt, da keine dritte Orbitalrichtung vorhanden ist. Es können somit bei beispielhafter Überflugrichtung Nord-Süd absolut nur die Ost-West-Verformung und die daraus errechnete vertikale Lageverschiebungen bestimmt werden. Die praktische Anwendung ist daher sehr eingeschränkt, es können damit keine (Brücken-)Bauwerke mit Orientierung in der Satelliten Flugbahn Nord-Süd gemessen werden. Ein Grundschema der bisherigen Koordinatentransformation von $D_{LOS}$ nach $d_E$ und vertikal $d_{up}$, ist in Fig. 4 und Fig. 5 dargestellt. Die Differenzen (gekennzeichnet durch den Buchstaben "d") beziehen sich immer auf unterschiedliche Zeitreihen.

Die Umrechnung der Koordinatentransformation erfolgt nach folgendem Grundschema:

- Satelliten fliegen in Umlaufbahnen bzw. Orbits um die Erde, und führen u.a. Radarverformungsmessungen an der Erdoberfläche durch.
- Die Aufnahmen finden aufgrund der Satellitenflugbahn zeitlich versetzt statt. Z.B. bei Sentinel passiert ein Satellit alle 12 Tage die gleiche Stelle an der Erdoberfläche im gleichen Orbit. Je nach Lage auf der Erdoberfläche wird der Punkt von mind. 2 Orbits im Idealfall von bis zu 4 Orbits überflogen, daraus resultieren 60-120 Aufnahmen pro Jahr.
- Sie können je Flugbahn/Orbit immer nur in Blickrichtung LOS messen.
- Die Aufnahmen der Zeitreihen werden mit Methoden der Fernerkundung vorprozessiert und korrigiert (z.B. ellipsoidische, topografische, verformungsabhängige, atmosphärische Korrektur, etc...).
- Es erfolgen mehrere Aufnahmen aus denen ein kohärenter Referenzpunkt (Persistent Scatterer Punkt) erkannt werden kann (in der Regel 20 Aufnahmen). (Referenzzeitpunkt=Zeitpunkt $t_1$).
- Es erfolgt eine weitere Aufnahme zeitlich versetzt, wenn der Satellit nach wenigen Tagen wieder an gleichem Ort und Stelle ist (Aufnahmezeitpunkt $t_2$)
- Die zeitlich differenzielle Änderung der Lagekoordinaten wird berechnet.

Fig. 4 zeigt eine Darstellung der Bildaufnahmen, Winkel und Lagebezeichnung bei Blickrichtung Ost-West nach [31].

Im Detail erfolgt die Bestimmung der Änderung der Lagekoordinaten im Stand der Technik wie folgt: Definitionen der Daten:

$\theta_i$ - Einfallswinkel (bekannt)
$\alpha_{ALD}$ - Azimut AZ - Blickrichtung ALD (bekannt)
$d_{up}$ -zeitliche vertikale Bewegung (gesucht)
$d_N$ - zeitliche Bewegung nach Norden (gesucht)
$d_E$ - zeitliche Bewegung nach Osten (gesucht)
di_os- gemessenes zeitliches Delta der zu unterschiedlichen Aufnahmezeitpunkten in Blickrichtung LOS gemessenen Schrägdistanz

Die $d_{LOS}$-Bewegung besteht, wie in den Abbildungen dargestellt, aus drei Komponenten: $d_{up}$, $d_N$ und $d_E$. Der trigonometrische Zusammenhang in Bezug auf Einfallswinkel $\theta_i$ und Azimut $\alpha_{ALD}$ wird durch folgende Gleichung 1 nach []:

$$d_{LOS} = d_{up*cos(\theta_i)} - (d_N * cos(\alpha_{ALD}) + d_E * sin(\alpha_{ALD})) * sin(\theta_i) \qquad \text{Gleichung 1}$$

Fig. 5 zeigt eine Darstellung der Koordinatentransformation von Bodenbewegungsrichtungen bei Anwendung von zwei Orbits bzw. Orbitalrichtungen.

Nachteile des bekannten Stands der Technik:

- Gleichung 1 ist unterbestimmt,
- der Betrag und die Richtung einer tatsächlichen Punktbewegung ist unbekannt,
- die Ableitung der vertikalen Brückenbewegung ist nur mit gleichzeitiger Projektion von beiden Orbitalrichtungen ASC - DSC möglich. Das heißt, Gleichung 1 wird für die zwei vorhandenen Orbitalrichtungen aufgestellt, welche jedoch zu unterschiedlichen Zeiten aufgenommen wurden. Gleichung 1 ist damit noch immer einfach unterbestimmt.

Aus diesem Grund wird im Stand der Technik folgende Näherung durchgeführt:

- Derzeitige Anwendung des Verfahrens nur bei Objekten in Ost-West-Orientierung, d.h. normal zur Flugrichtung Nord-Süd und in ungefährer Ausrichtung in Blickrichtung LOS des Satelliten möglich.
- Bei Ausrichtung des Objekts in Ost-West-Richtung, ist der Einfluss der zeitlichen Bewegung nach Norden $d_N$ untergeordnet und wird vernachlässigt. Es sind nur mehr zwei Größen übrig, die berechnet werden können.
- Ermittlung absoluter Lageverschiebung in Ostrichtung E als Differenz der einzelnen Zeitreihen ($d_E$) unter Einbezug beider Orbitalrichtungen ASC, DSC, und Berechnung $d_{up}$ aus Gleichung 1.

Da die Messung aus den beiden Orbitalrichtungen ASC und DSC zu unterschiedlichen Zeitpunkten stattfindet, ist dies gut geeignet für langsame Bodenbewegungen. Aufgrund starker temperaturbedingter Änderungen im Tagesgang, wie diese beispielsweise bei vielen weitgespannten Brücken auftreten, ist der Einsatz dieser Methodik für Bauwerke nur eingeschränkt möglich, da die thermische Verschiebung zu den unterschiedlichen Aufnahmezeitpunkten berücksichtigt werden muss (bauwerksspezifische TemperaturKompensation). In der Regel wurde bisher in der Fernerkundung/MTInSAR, wie in den vielen Arbeiten [11-29] gezeigt, zumindest die Oberflächen- bzw. Lufttemperatur zum Aufnahmezeitpunkt als eine Korrektur des thermischen Verschiebungsanteils verwendet, welche parallel zu den Zeitreihenaufnahmen berechnet wurde und in die Auswertung miteinbezogen werden. Entscheidend ist jedoch die Bauteilverschiebung selbst, und damit die Bauteiltemperatur, welche aufgrund der Beharrungseffekte der eingesetzten Materialien als instationärer Prozess nicht direkt proportional mit der Lufttemperatur zusammenhängt.

Aufgabe der Erfindung ist es daher, diesbezüglich Abhilfe zu schaffen und ein Verfahren zur Ermittlung der relativen Vertikalverformung $\Delta d_{Up}$ eines zu untersuchenden Objekts bereitzustellen, das die bekannten Nachteile überwindet, für Objekte mit beliebiger Orientierung bzw. Ausrichtung zur Blickrichtung eines Satelliten bzw. Flugobjekts, von dem die InSAR-Daten aufgenommen werden, anwendbar ist, eine verbesserte Genauigkeit aufweist und eine bestmögliche Ausnutzung der vorhandenen Datenbasis ermöglicht.

Die Erfindung löst diese Aufgabe mit einem Verfahren zur Ermittlung der relativen Vertikalverformung $\Delta d_{Up}$ eines zu untersuchenden Objekts, insbesondere eines Bauwerks, vorzugweise einer Brücke, innerhalb einer Zeitspanne zwischen zeitlich aufeinanderfolgenden Aufnahmezeitpunkten basierend auf von zumindest einem Flugobjekt gemessenen Interferometric Synthetic Aperture Radar (InSAR-)Daten,

- wobei sich das zumindest eine Flugobjekt auf einer Flugbahn in einer Flugrichtung wiederholt in zeitlichem Abstand über das zu untersuchende Objekt bewegt und währenddessen entlang einer Blickrichtung (LOS) InSAR-Daten aufnimmt,

- wobei basierend auf den aufgenommenen InSAR-Daten Interferogramme erstellt werden, und
- wobei zumindest zwei Persistent Scatterer (PS-)Punkte auf dem zu untersuchenden Objekt als Pixel ermittelt werden, die über eine Folge von Interferogrammen kohärent bleiben,

mit den Merkmalen von Patentanspruch 1. Erfindungsgemäß sind dabei folgende Schritte vorgesehen:

- Ermitteln der Veränderung der Phase in Blickrichtung mit dem zugehörigen Einfallswinkel $\theta_i$ zwischen der Blickrichtung und der Nadirrichtung und dem zugehörigen Winkel $\alpha_{ALD}$ zwischen der auf eine horizontale Fläche projizierten Blickrichtung und der geographischen Nordrichtung für die zumindest zwei PS-Punkte auf dem zu untersuchenden Objekt basierend auf zu zumindest zwei Aufnahmezeitpunkten erstellten Interferogrammen,
- Ableiten der differenziellen Verformungsänderung $\Delta d_{LOS}$ des zu untersuchenden Objekts in der Blickrichtung des Flugobjekts zwischen den Aufnahmezeitpunkten basierend auf der ermittelten Veränderung der Phase, insbesondere nach Korrektur von Fehlern bedingt durch Phasensprünge,
- Durchführen einer Koordinatentransformation der differenziellen Verformungsänderung $\Delta d_{LOS}$ in die Richtung des zu untersuchenden Objekts, wobei die horizontalen Bewegungskomponenten der differenziellen Verformungsänderung $\Delta d_{LOS}$ auf die Längs- und die Querrichtung des zu untersuchenden Objekts projiziert werden, insbesondere unter Heranziehung des Winkel $\alpha_{Ob}$ zwischen der auf eine horizontale Fläche projizierten Längsachse des Objekts und der geographischen Nordrichtung,
- Ermittlung der Temperatur, insbesondere der Temperatur des zu untersuchenden Objekts, insbesondere als Schätzwert und/oder durch Messung,
- Ermittlung der zwischen den Aufnahmezeitpunkten aufgetretenen relativen Differenzverformung $\Delta d_{Long}$ in Längsrichtung des zu untersuchenden Objekts zwischen den, den PS-Punkten entsprechenden, Betrachtungspunkten auf dem zu untersuchenden Objekt unter Berücksichtigung der ermittelten Temperatur
- Berechnung der relativen Vertikalverformung $\Delta d_{up}$ des zu untersuchenden Objekts zwischen den Aufnahmezeitpunkten unter Heranziehung der zuvor ermittelten relativen Differenzverformung $\Delta d_{Long}$ in Längsrichtung und der differenziellen Verformungsänderung $\Delta d_{LOS}$.

Im Zusammenhang mit der Erfindung wird unter einem Flugobjekt jegliches Objekt verstanden, dass sich in einem Abstand zur Erdoberfläche entlang einer vorgegebenen, insbesondere geschlossenen, Flugbahn über diese hinwegbewegt bzw. diese überfliegt und dabei InSAR-Daten aufnehmen kann. Bei einem solchen Flugobjekt kann es sich beispielsweise um ein Flugzeug, einen Hubschrauber, eine Drohne oder andere unbemannte Flugobjekte, aber in erster Linie um Satelliten handeln. Derartige Flugobjekte verfügen über spezielle Radarantennen, welche für die für Radarinterferometrie (engl. Interferometric Synthetic Aperture Radar - InSAR) geeignet sind.

Bei einer solchen Flugbahn kann es sich beispielsweise im Fall eines Satelliten um einen Orbit handeln, der sich jeweils kreisförmig oder elliptisch um die Erde, insbesondere auf der einen Seite der Erde von einem ersten Pol zu einem diesem gegenüberliegenden zweiten Pol und daran anschließend auf der anderen Seite der Erde vom zweiten Pol zum ersten Pol, erstreckt. Unter der Flugrichtung wird die Fortbewegungsrichtung des Flugobjekts bei seiner Bewegung entlang seiner Flugbahn verstanden, beispielsweise die Orbitalrichtung. Unter der Blickrichtung des Flugobjekts wird dabei diejenige Richtung verstanden, unter der das Flugobjekt InSAR-Daten von Objekten auf der Erdoberfläche aufnimmt. Unter dem Nadir wird der dem Zenit gegenüberliegende Fußpunkt verstanden, unter dem Azimut wird der Horizontalwinkel gegenüber der nach Nordrichtung verstanden.

Unter InSAR-Daten werden die Messdaten, beispielsweise SAR-Bilder der Satelliten nach der InSAR-Methode, verstanden, welche - vorzugsweise mit fernerkundlichen Methoden vorprozessiert und, gegebenenfalls nach Korrektur(en) - interferometrisch analysiert werden.

Unter PS-Punkten auf dem zu untersuchenden Objekt bzw. Pixeln, die über eine Folge von Interferogrammen kohärent bleiben, werden im Zusammenhang mit der Erfindung Punkte bzw. Pixel verstanden, die zu unterschiedlichen Aufnahmezeitpunkten gleich abstrahlend bleiben.

Mit einem erfindungsgemäßen Verfahren ist es vorteilhafterweise möglich, die relative Vertikalverformung $\Delta d_{Up}$ eines zu untersuchenden Objekts aus den Messwerten nur einer einzigen Orbitalrichtung und den zugehörigen bestimmten horizontalen Lageverschiebungen der Betrachtungspunkte zu ermitteln. Die zwischen den Aufnahmezeitpunkten aufgrund thermischer Effekte auftretende horizontale relative Lageänderung bzw. Verformungskomponente wird vorteilhafterweise ebenfalls berücksichtigt.

Das Hauptaugenmerk bei einem erfindungsgemäßen Verfahren liegt im Unterschied zum Stand der Technik nicht auf der absoluten Lageänderung, sondern es wird eine relative Verschiebung zwischen zwei Persistant Scatterer-Punkten bzw. den, diesen PS-Punkten entsprechenden, Betrachtungspunkten auf dem zu untersuchenden Objekt ermittelt.

Dazu wird erfindungsgemäß eine Koordinatentransformation der differenziellen Verformungsänderung $\Delta d_{LOS}$

in die Richtung des zu untersuchenden Objekts vorgenommen und die horizontalen Bewegungskomponenten, d.h. die Nord-Komponente $\Delta d_E$, und Ost-Komponente $\Delta d_N$ der differenziellen Verformungsänderung $\Delta d_{LOS}$ des Objekts in die Richtung des Objekts, also auf die Längs- und die Querrichtung des zu untersuchenden Objekts projiziert.

Im Gegensatz zu den aus Stand der Technik bekannten Verfahren ist es auf diese Weise möglich, Objekte mit beliebiger Orientierung bzw. Ausrichtung zur Blickrichtung LOS des Flugobjekts bzw. dessen Flugbahn zu untersuchen. Ein erfindungsgemäßes Verfahren ist nicht darauf angewiesen, dass z.B. bei Heranziehung von InSAR-Daten von Sentinel-Satelliten die Nord-Komponente $\Delta d_N$ der differenziellen Verformungsänderung $\Delta d_{LOS}$ nur eine untergeordnete Rolle spielt, wenn das untersuchte Objekt sich in Ost-West-Richtung erstreckt, was bedingt, dass eine Anwendung der bekannten Verfahren nur bei Objekten mit Ost-West-Orientierung möglich ist und wofür auch Messwerte aus zwei unterschiedlichen Flug- bzw. Orbitalrichtungen ASC, DSC benötigt werden.

Die Vorteile dieses Ansatzes beruhen an der Tatsache, dass kein Verschneiden verschiedener Orbits mehr notwendig ist, um auf von der zeitlich ändernden Schrägdistanz $d_{LOS}$ auf die vertikale Richtung $d_{up}$ umzurechnen.

Daraus resultieren folgende Vorteile:

- Dichtere Zeitreihen, da die InSAR-Messdaten verschiedener Orbitalrichtungen jeweils für sich genutzt werden können und nicht miteinander verschnitten werden müssen.
- Mehr mögliche Betrachtungspunkte auf dem untersuchten Objekt, da die einzelnen möglichen Betrachtungspunkte nicht von jeweils zwei Orbits bzw. Orbitalrichtungen aus gesehen werden müssen, sodass ein erfindungsgemäßes Verfahren auch auf kleinere Brücken anwendbar ist und eine verbesserte Genauigkeit liefert.
- Gesteigerte Genauigkeit, da keine Unschärfen aufgrund von zwischen den verschiedener Aufnahmezeitpunkten aufgetretenen thermischen Effekten mehr vorliegen.
- Keine Einschränkung der Messobjektausrichtung, wohingegen bei bekannten Verfahren derzeit nur Objekte mit ungefährer Ausrichtung in Blickrichtung LOS des Satelliten, von dem aus die InSAR-Daten gemessen werden, möglich ist. Bei Nutzung von Sentinel-Satelliten ist bei bekannten Verfahren z.B. eine Ost-West Orientierung des zu untersuchenden Objekts notwendig.

Eine weiter verbesserte Genauigkeit bei der Bestimmung der relativen Vertikalverformung $\Delta d_{Up}$ eines zu untersuchenden Objekts kann erzielt werden,

- wenn die zwischen den Aufnahmezeitpunkten aufgetretene relative Differenzverformung $\Delta d_{Trans}$ in Querrichtung des zu untersuchenden Objekts zwischen den, den PS-Punkten entsprechenden, Betrachtungspunkten auf dem zu untersuchenden Objekt unter Berücksichtigung der ermittelten Temperatur ermittelt wird und
- wenn bei der Berechnung der relativen vertikalen Differenzverformung $\Delta d_{Up}$ des zu untersuchenden Objekts zwischen den Aufnahmezeitpunkten zusätzlich die relative Differenzverformung $\Delta d_{Trans}$ in Querrichtung herangezogen wird.

Auf diese Weise ist es vorteilhaft möglich, bei Objekten, die nicht längserstreckt ausgebildet sind, eine besonders hohe Genauigkeit bei der ermittelten relativen Vertikalverformung $\Delta d_{Up}$ zu erzielen.

Eine besonders exakte Feststellung der für die relative Differenzverformung $\Delta d_{Long}$ in Längsrichtung des zu untersuchenden Objekts relevanten Temperatur kann erzielt werden, wenn zur Ermittlung der Temperatur die innere Temperatur des zu untersuchenden Objekts gemessen wird. Dies erfolgt beispielsweise durch Einbohren der Temperatursensoren in das Tragwerksinnere im Falle eines Massivtragwerkes (z.B. aus Beton), bzw. durch das Ankleben an der Oberfläche bei dünnwandigen Tragwerken, beispielsweise aus Stahl. Die Genauigkeit dieser Temperaturbestimmung steigt mit der Anzahl der verwendeten Temperatursensoren im Querschnitt sowie über die Länge des Tragwerks.

Eine alternative oder zusätzliche Variante zur Feststellung der für die relative Differenzverformung $\Delta d_{Long}$ in Längsrichtung des zu untersuchenden Objekts relevanten Temperatur, die mit wenigen, besonders einfach ausgestalteten Temperatursensoren im Bereich des Objekts bzw. gänzlich ohne derartige Temperatursensoren auskommt, kann bereitgestellt werden, wenn die Lufttemperatur in Bereich des zu untersuchenden Objekts gemessen und/oder aus Wetterdaten abgeleitet wird.

Eine weitere alternative oder zusätzliche Variante zur Feststellung der für die relative Differenzverformung $\Delta d_{Long}$ in Längsrichtung des zu untersuchenden Objekts relevanten Temperatur, die gänzlich ohne Temperatursensoren im Bereich des Objekts auskommt, kann bereitgestellt werden, wenn zur Ermittlung der Temperatur ein empirisches Temperaturmodell zur Ableitung der inneren Temperatur des zu untersuchenden Objekts basierend auf Netzwetterdaten herangezogen wird.

Gemäß einer besonders exakten und gleichzeitig rechnerisch besonders einfachen Variante eines erfindungsgemäßen Verfahrens kann vorgesehen sein, dass zur Ermittlung der relativen Differenzverformung $\Delta d_{Long}$ in Längsrichtung des zu untersuchenden Objekts die thermische Verformung zwischen den, den PS-Punkten entsprechenden, Betrachtungspunkten auf dem zu untersuchenden Objekt unter Berücksichtigung der Temperatur, insbesondere der inneren Temperatur des zu untersuchenden Objekts, mit einem mechanischen Modell berechnet wird.

Zur weiteren Verbesserung der Berechnungsgenauigkeit bei der Ermittlung der relativen Vertikalverformung $\Delta d_{Up}$ eines zu untersuchenden Objekts kann vorgesehen sein, dass zur Ermittlung der relativen Differenzverformung $\Delta d_{Long}$ in Längsrichtung des zu untersuchenden Objekts und/oder zur Kalibration des in einem erfindungsgemäßen Verfahren verwendeten mechanischen Modells die Lageverschiebung zwischen den, den PS-Punkten entsprechenden, Betrachtungspunkten auf dem zu untersuchenden Objekt messtechnisch, insbesondere durch Laserdistanzmessung, ermittelt wird.

Um Fehlinterpretationen bedingt durch Phasensprünge in den Messdaten besonders effektiv zu vermeiden, kann bei einem erfindungsgemäßen Verfahren vorgesehen sein, dass vor dem Ableiten der differenziellen Verformungs-änderung $\Delta d_{LOS}$ des zu untersuchenden Objekts zur Korrektur von Fehlern bedingt durch Phasensprünge eine Korrektur der Phasenzahl in Blickrichtung des Flugobjekts, insbesondere eine Korrektur mit statistischen Methoden, vorzugsweise ein phase unwrapping, für die zumindest zwei PS-Punkte auf dem zu untersuchenden Objekt basierend auf zumindest zwei zu annähernd gleichem Aufnahmezeitpunkt, insbesondere entlang derselben Blickrichtung, aufgenommen InSAR-Datensätzen vorgenommen wird.

Unter Phasenzahl wird im Zusammenhang mit der Erfindung die ganzzahlige Anzahl der Wellen verstanden, welche für die Distanzmessung über Messung des Zeitsignals bestimmt werden. Phasenmehrdeutigkeiten bzw. Phasensprünge sind bedingt durch eine Fehlinterpretation der Phasenanzahl aufgrund Messfehler in der Zeitnehmung bei der Messung der Änderung der Schrägdistanz in Blickrichtung (LOS=Line of Sight) des Satelliten und können durch statistische Methoden, insbesondere phase unwrapping, korrigiert werden.

In diesem Zusammenhang kann für eine besonders effektive Nutzung der zur Verfügung stehenden InSAR-Daten vorgesehen sein,

dass sich zumindest ein weiteres Flugobjekt auf einer weiteren Flugbahn in einer weiteren, zur Flugrichtung des Flugobjekts entgegengesetzten, Flugrichtung wiederholt in zeitlichem Abstand über das zu untersuchende Objekt bewegt und währenddessen entlang einer weiteren Blickrichtung InSAR-Daten aufnimmt, und
dass zur Korrektur der Phasenzahl in Blickrichtung des Flugobjekts für die zumindest zwei PS-Punkte auf dem zu untersuchenden Objekt von dem sich auf der weiteren Flugbahn in der weiteren, entgegengesetzten, Flugrichtung bewegenden weiteren Flugobjekt entlang der weiteren Blickrichtung zu annähernd gleichem Aufnahmezeitpunkt aufgenommene InSAR-Daten herangezogen werden.

Um die relative Vertikalverformung $\Delta d_{Up}$ eines zu untersuchenden Objekts unabhängig von der Ausrichtung des Objekts zur Flugbahn des Flugobjekts und aus den InSAR-Daten eines einzelnen Flugobjekts mit nur einer Flugrichtung rechnerisch besonders einfach bestimmen zu können, kann vorgesehen sein, dass die horizontalen Bewe-gungskomponenten in OstRichtung $\Delta d_E$ und in Nord-Richtung $\Delta d_N$ der differenziellen Verformungsänderung $\Delta d_{LOS}$ auf die Längs- und die Querrichtung des zu untersuchenden Objekts projiziert werden gemäß

$$\Delta d_{Long} = \Delta d_E {}^* \cos(\alpha_{ALD} - \alpha_{Ob})$$

$$\Delta d_{Trans} = \Delta d_N {}^* \sin(\alpha_{ALD} - \alpha_{Ob})$$

Um die relative Vertikalverformung $\Delta d_{Up}$ eines zu untersuchenden Objekts mit beliebiger Ausrichtung zur Flugbahn des Flugobjekts unabhängig von der absoluten Bewegung des Objekts in Nord-Richtung bei längserstreckt ausgebildeten Objekten besonders einfach bestimmen zu können, kann vorgesehen sein, dass die relative Vertikalverfor-mung $\Delta d_{up}$ berechnet wird nach

$$\Delta d_{up} = \frac{\Delta d_{LOS} + \Delta d_{Long} * \cos(\alpha_{ALD} - \alpha_{Ob}) * \sin(\theta_i)}{\cos(\theta_i)}$$

Um die relative Vertikalverformung $\Delta d_{Up}$ eines zu untersuchenden Objekts mit beliebiger Ausrichtung zur Flugbahn des Flugobjekts unabhängig von der absoluten Bewegung des Objekts in Nord-Richtung bei Objekten mit beliebiger Form bestimmen zu können, kann vorgesehen sein, dass die relative Vertikalverformung $\Delta d_{Up}$ berechnet wird nach

$$\Delta d_{up} = \frac{\Delta d_{LOS} + \left(\Delta d_{Long} * cos(\alpha_{ALD} - \alpha_{Ob}) + \Delta d_{Trans} * sin(\alpha_{ALD} - \alpha_{Ob})\right) * sin(\theta_i)}{cos(\theta_i)}$$

Um bei der Berechnung der relativen Differenzverformung $\Delta d_{Long}$ in Längsrichtung des zu untersuchenden Objekts vorteilhaft ausnutzen zu können, dass diese von der thermischen Ausdehnung des Objekts dominiert ist, kann vorgesehen sein, dass die relative Differenzverformung $\Delta d_{Long}$ in Längsrichtung des zu untersuchenden Objekts gemäß eines einfachen Stabmodells berechnet wird nach

$$\Delta d_{Long} = \Delta L * \alpha_b * \Delta T$$

wobei $\Delta L$ der relativen Distanz zwischen den, den PS-Punkten entsprechenden, Betrachtungspunkten auf dem zu untersuchenden Objekt, $\alpha_b$ dem spezifischen Ausdehnungskoeffizienten des zu untersuchenden Objekts und $\Delta T$ der Veränderung der inneren Temperatur des zu untersuchenden Objekts und/oder der Lufttemperatur im Bereich des zu untersuchenden Objekts zwischen den Aufnahmezeitpunkten entspricht.

Gemäß einer besonders exakten und besonders einfach an verschiedenste variierende Parameter anzupassende Variante eines erfindungsgemäßen Verfahrens kann vorgesehen sein, dass zur Ermittlung der relativen Differenzverformung $\Delta d_{Long}$ in Längsrichtung und/oder zur Ermittlung der relativen Differenzverformung $\Delta d_{Trans}$ in Querrichtung ein Modell, insbesondere ein Finite-Elemente-Modell, erstellt und die relative Differenzverformung $\Delta d_{Long}$ in Längsrichtung und/oder die relative Differenzverformung $\Delta d_{Trans}$ in Querrichtung unter Berücksichtigung des spezifischen Ausdehnungskoeffizient $\alpha_b$ des zu untersuchenden Objekts und der Veränderung der inneren Temperatur des zu untersuchenden Objekts und/oder der Lufttemperatur im Bereich des zu untersuchenden Objekts zwischen den Aufnahmezeitpunkten modelliert werden.

Zur weiteren Verbesserung der Genauigkeit bei der Ermittlung der relativen Vertikalverformung $\Delta d_{Up}$ eines zu untersuchenden Objekts kann vorgesehen sein, dass vor der Ermittlung der PS-Punkte

- eine Korrektur, insbesondere eine ellipsoidische, topografische, verformungsabhängige und/oder atmosphärische Korrektur, der aufgenommenen InSAR-Daten vorgenommen wird und/oder
- weitere Signalverarbeitungsschritte auf die erstellten Interferogramme angewandt werden.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben.

Im Folgenden zeigen schematisch:

Fig. 6a, Fig. 6b ein Ausführungsbeispiel für eine Korrektur von fehlinterpretierten Phasensprüngen,

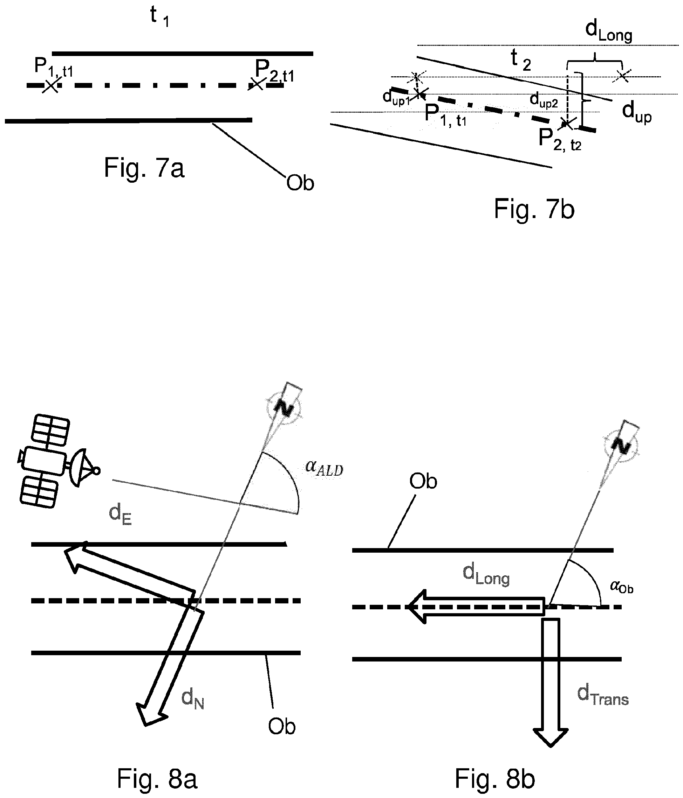

Fig. 7a eine Darstellung der Lage zweier Betrachtungspunkte $P_1$ und $P_2$ auf einer Brücke als zu untersuchendem Bauwerk,
Fig. 7b eine Darstellung der zeitlichen Änderung der Lage zweier Betrachtungspunkte $P_1$ und $P_2$ zwischen zwei unterschiedlichen Aufnahmen zu den Zeitpunkten $t_1$ und $t_2$,
Fig. 8a die differenzielle Verformung $D_{LOS}$ in der Blickrichtung LOS des Flugobjekts, die horizontalen Bewegungskomponenten $d_E$, $\Delta d_N$ der differenziellen Verformung $D_{LOS}$ und den Winkel $\alpha_{ALD}$,
Fig. 8b eine Darstellung einer Koordinatentransformation in Objektrichtung im Rahmen eines erfindungsgemäßen Verfahrens,
Fig. 9 geometrischer Zusammenhang der Verschiebungskomponenten der gemessen Schrägdistanz $d_{LOS}$ in Blickrichtung LOS in die vektorielle Zerlegung der gesuchten vertikalen Richtung $d_{up\ vertikal}$ und resultierende Längsrichtung $d_{Long}$,

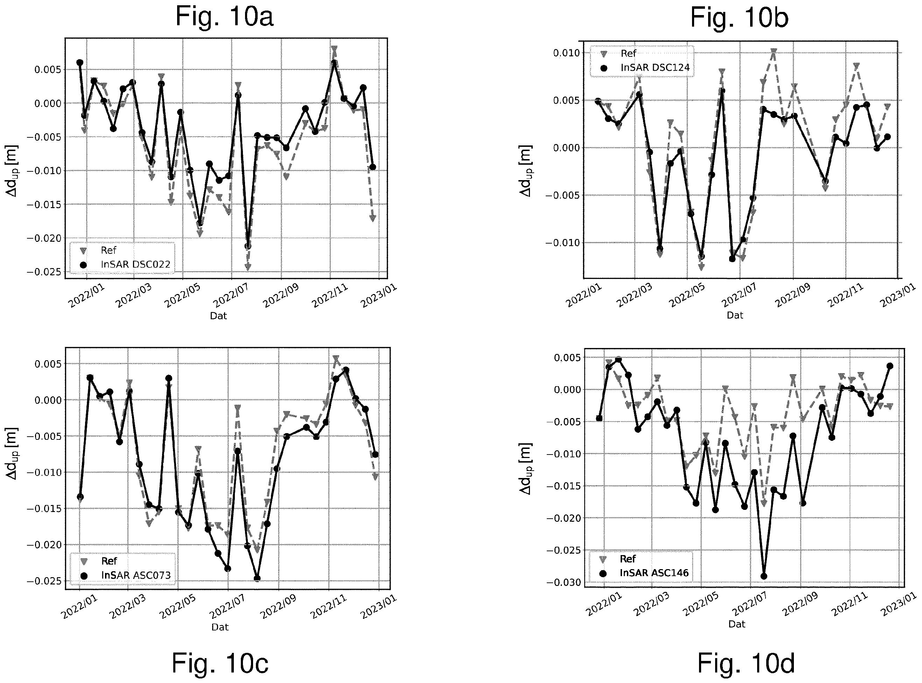

Fig. 10a eine Darstellung der mittels digitaler Schlauchwaage berechneten zeitlichen Verformung $\Delta d_{up}$ von zwei Referenzpunkten Ref an einem untersuchten Objekt und der erfindungsgemäß berechneten relativen Vertikalverformung basierend auf Daten eines ersten Orbits,
Fig. 10b eine Darstellung der mittels digitaler Schlauchwaage berechneten zeitlichen Verformung $\Delta d_{Up}$ von zwei Referenzpunkten Ref an einem untersuchten Objekt und der erfindungsgemäß berechneten relativen Vertikalverformung basierend auf Daten eines zweiten Orbits,
Fig. 10c eine Darstellung der mittels digitaler Schlauchwaage berechneten zeitlichen Verformung $\Delta d_{Up}$ von zwei

Referenzpunkten Ref an einem untersuchten Objekt und der erfindungsgemäß berechneten relativen Vertikalverformung basierend auf Daten eines dritten Orbits,

Fig. 10d eine Darstellung der mittels digitaler Schlauchwaage berechneten zeitlichen Verformung $\Delta d_{Up}$ von zwei Referenzpunkten Ref an einem untersuchten Objekt und der erfindungsgemäß berechneten relativen Vertikalverformung basierend auf Daten eines vierten Orbits,

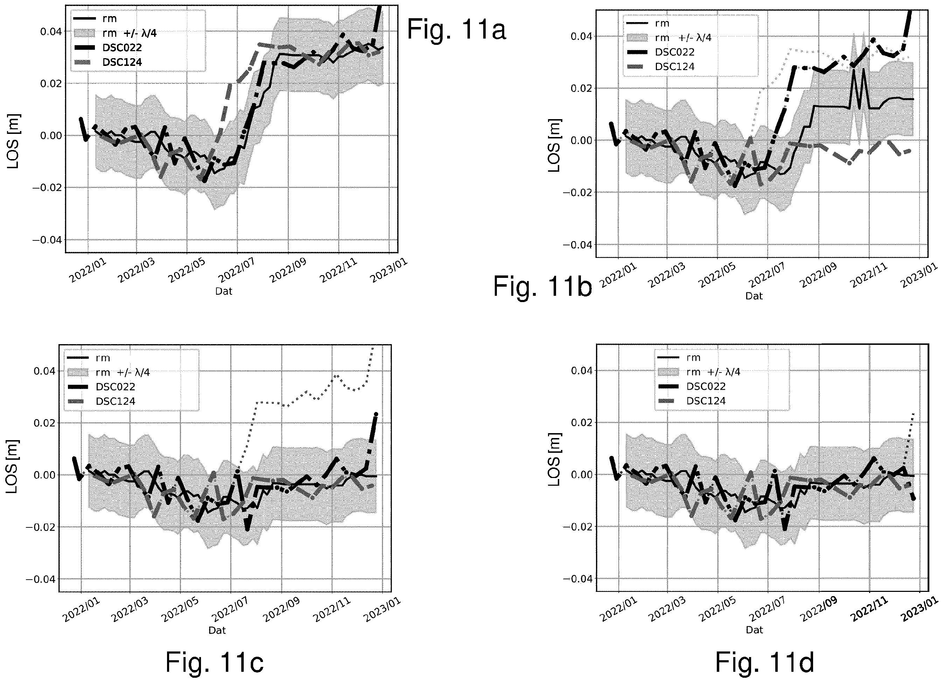

Fig. 11a ein erstes Ausführungsbeispiel einer statistischen Korrektur der Phasensprünge durch phase unwrapping,

Fig. 11b ein zweites Ausführungsbeispiel einer statistischen Korrektur der Phasensprünge durch phase unwrapping,

Fig. 11c ein drittes Ausführungsbeispiel einer statistischen Korrektur der Phasensprünge durch phase unwrapping,

Fig. 11d ein viertes Ausführungsbeispiel einer statistischen Korrektur der Phasensprünge durch phase unwrapping.

Im Folgenden wird ein erfindungsgemäßes Verfahren zur Ermittlung der relativen Vertikalverformung $\Delta d_{Up}$ eines zu untersuchenden Objekts Ob, beispielsweise eines Bauwerks wie einer Brücke, innerhalb einer Zeitspanne zwischen zeitlich aufeinanderfolgenden Aufnahmezeitpunkten basierend auf von einem Satelliten gemessenen Interferometrie Synthetic Aperture Radar (InSAR-)Daten zunächst allgemein und anschließend anhand von konkreten Ausführungsbeispiel erläutert.

Zwar wird ein erfindungsgemäßes Verfahren im Folgenden anhand von Satellitengemessenen InSAR-Daten für die Ermittlung der relativen Vertikalverformung $\Delta d_{Up}$ einer Brücke als zu untersuchendem Objekt Ob beschrieben. Ein erfindungsgemäßes Verfahren ist jedoch keinesfalls auf diese Art von Flugobjekt zur Messung der InSAR-Daten beschränkt. Wesentlich ist lediglich, dass das Flugobjekt, sei es ein Satellit, ein Flugzeug, ein Hubschrauber, eine Drohne oder dergleichen, sich auf einer konstanten, vorgegebenen Flugbahn in einer Flugrichtung wiederholt in zeitlichem Abstand über das zu untersuchende Objekt bewegt und währenddessen entlang einer Blickrichtung LOS InSAR-Daten aufnimmt. Weiters ist ein erfindungsgemäßes Verfahren nicht auf langgestreckte Objekte Ob wie beispielsweise Brücken beschränkt. Ganz im Gegenteil ist mit einem erfindungsgemäßen Verfahren die relative Vertikalverformung $\Delta d_{Up}$ beliebiger Objekte Ob bestimmbar, die vor allem auch eine beliebige Orientierung zur Flugbahn des Flugobjekts, das die InSAR-Daten misst, aufweisen können.

**Allgemeine Beschreibung**

Mit einem erfindungsgemäßen Verfahren erfolgt eine Transformation von mit Flugobjekten, z.B. Satelliten, in einer Blickrichtung, d.h. einer Schrägdistanz oder Line of Sight LOS, gemessenen Verformungen von zumindest zwei eindeutig zuordenbaren Persistent Scatterer (PS)-Punkten bzw. den diesen PS-Punkten entsprechenden Betrachtungspunkten $P_1$, $P_2$ auf dem untersuchten Objekt. Dazu werden zumindest zwei PS-Punkte auf dem zu untersuchenden Objekt als Pixel ermittelt, die über eine Folge von Interferogrammen kohärent bleiben.

Es werden dabei zwei Betrachtungspunkte $P_1$, $P_2$, z.B. fix am Objekt montierte Corner-Reflektoren CR, welche als Referenzbezug und Verstärkung des Radarsignals dienen, definiert, deren Relativbewegungen bei unterschiedlichen Zeitpunkten $t_1$, $t_2$ zueinander untersucht werden sollen (siehe Fig. 7a, 7b). Die Berechnung der relevanten relativen Vertikalverformung $\Delta d_{Up}$ der beiden Betrachtungspunkte $P_1$, $P_2$ auf dem Objekt Ob erfolgt anschließend auf Basis von zumindest zwei zu den Zeitpunkten $t_1$, $t_2$ aufgenommenen Szenen Sz bzw. Interferogrammen des Objekts Ob.

Dabei wird zunächst basierend auf zu zumindest zwei Aufnahmezeitpunkten $t_1$, $t_2$ erstellten Interferogrammen die Veränderung der Phase in Blickrichtung LOS mit dem zugehörigen Einfallswinkel $\theta_i$ zwischen der Blickrichtung LOS und der Nadirrichtung Nad und dem zugehörigen Winkel $\alpha_{ALD}$ zwischen der auf eine horizontale Fläche projizierten Blickrichtung LOS und der geographischen Nordrichtung N für die zumindest zwei PS-Punkte auf dem zu untersuchenden Objekt Ob ermittelt. Die differenzielle Verformungsänderung $\Delta d_{LOS}$ des zu untersuchenden Objekts Ob in der Blickrichtung LOS des Flugobjekts zwischen den Aufnahmezeitpunkten $t_1$, $t_2$ wird basierend auf der ermittelten Veränderung der Phase abgeleitet - vorzugsweise nach Korrektur von Fehlern bedingt durch Phasensprünge, worauf weiter unten noch näher eingegangen wird.

Nach einer ursprünglichen Aufnahme zum Referenzzeitpunkt $t_1$ ändert sich die Lage der Betrachtungspunkte $P_1$, $P_2$ innerhalb der betrachteten Zeitspanne $\Delta t = t_2 - t_1$. Die für das Bauwerksmonitoring wichtige Betrachtung der relativen Vertikalverschiebung $\Delta d_{up}$ zwischen $P_1$ und $P_2$ innerhalb $\Delta t$ kann über die weiter oben angeführte Gleichung 1 bestimmt werden zu:

$$\Delta d_{up} = d_{up2} - d_{up1}$$

Fig. 1a zeigt die Lage zweier Betrachtungspunkte bzw. PS-Punkte $P_1$, $P_2$ auf einem untersuchten, langgestreckten Objekt Ob, nämlich einer Brücke, zu einem ersten Zeitpunkt $t_1$. Fig. 7b zeigt die zeitliche Änderung der Lage der Betrachtungspunkte bzw. PS-Punkte $P_1$, $P_2$ zwischen den Aufnahmezeitpunkten $t_1$ und $t_2$. Aufgrund einer Abkühlung kommt es zu einer Verkürzung der Brücke und einer Absenkung der beiden Betrachtungspunkte $P_1$, P2.

Zur Ermittlung der relativen Vertikalverformung $\Delta d_{Up}$ erfolgt erfindungsgemäß eine Koordinatentransformation aus, vorzugsweise fernerkundlich vorprozessierten, InSAR-Messdaten. Es sind jedoch nur InSAR-Daten aus EINER Überflugrichtung bzw. Orbitalrichtung erforderlich, sowie die zugehörigen bestimmten horizontalen Lageverschiebungen bzw. Bewegungskomponenten der Betrachtungspunkte $P_1$, $P_2$ auf dem Objekt Ob. Beide Anteile, nämlich die aus InSAR-Daten berechnete Schrägdistanz und die horizontalen Lageverschiebungen bzw. Bewegungskomponenten werden in der Koordinatentransformation verwendet und es wird die relative Vertikalverformung $\Delta d_{Up}$ zwischen den Aufnahmezeitpunkten $t_1$, $t_2$ bestimmt.

Im Rahmen eines erfindungsgemäßen Verfahrens erfolgt dabei eine Koordinatentransformation der differenziellen Verformungsänderung $\Delta d_{LOS}$ des zu untersuchenden Objekts Ob in der Blickrichtung LOS des Flugobjekts in die Richtung des zu untersuchenden Objekts Ob unter Einbezug der relativen horizontalen Lageänderungen ($\Delta d_{Long}$, $\Delta d_{Trans}$) auf dem Objekt Ob, d.h. die horizontalen Bewegungskomponenten $\Delta d_E$, $\Delta d_N$ der differenziellen Verformungsänderung $\Delta d_{LOS}$ werden auf die Längs- und die Querrichtung des zu untersuchenden Objekts Ob projiziert.

Ausgehend von Gleichung 1 wird die horizontale Bewegungskomponente folgendermaßen auf die Längs- $\Delta d_{Long}$ und Querrichtung $\Delta d_{Trans}$ des Objekts Ob, im Ausführungsbeispiel der Brücke, projiziert:

$$\Delta d_{Long} = \Delta d_E * \cos(\alpha_{ALD} - \alpha_{Brücke})$$

$$\Delta d_{Trans} = \Delta d_N * \sin(\alpha_{ALD} - \alpha_{Brücke})$$

wobei

$\alpha_{Ob} = \alpha_{Brücke}$     Azimut der Brücke
$\Delta$     Differenz der zeitlichen Aufnahmen.

Fig. 8a zeigt schematisch die differenzielle Verformung $d_{LOS}$ des zu untersuchenden Objekts Ob in der Blickrichtung LOS des Flugobjekts, sowie die horizontalen Bewegungskomponenten $d_E$, $\Delta d_N$ der differenziellen Verformung $D_{LOS}$ in Ostrichtung E und in Nordrichtung N und den Winkel $\alpha_{ALD}$ zwischen der auf eine horizontale Fläche projizierten Blickrichtung LOS und der geographischen Nordrichtung N. Fig. 8b zeigt schematisch die Koordinatentransformation in Objektrichtung mit den auf die Längs- und Querrichtung der untersuchten Brücke projizierten horizontalen Bewegungskomponenten $\Delta d_{Long}$ und $\Delta d_{Trans}$ und dem Winkel $\alpha_{Brücke}$ zwischen der auf eine horizontale Fläche projizierten Längsachse der Brücke und der geographischen Nordrichtung N.

Damit nimmt die Gleichung 1 folgende Form an:

$$\Delta d_{up} = \frac{\Delta d_{LOS} + (\Delta d_{Long} * \cos(\alpha_{ALD} - \alpha_{Ob}) + \Delta d_{Trans} * \sin(\alpha_{ALD} - \alpha_{Ob})) * \sin(\theta_i)}{\cos(\theta_i)} \quad \text{Gleichung 2}$$

Bei längserstreckten bzw. langgestreckten Objekten Ob wie Brücken ist zumeist nur die dominierende Verschiebungskomponente in Objektlängsrichtung, d.h. relativen Differenzverformung $\Delta d_{Long}$ in Längsrichtung des zu untersuchenden Objekts Ob, maßgebend, sodass die relative Differenzverformung $\Delta d_{Trans}$ in Querrichtung des zu untersuchenden Objekts Ob unberücksichtigt bleiben kann, womit sich Gleichung 2 reduziert zu Gleichung 3:

$$\Delta d_{up} = \frac{\Delta d_{LOS} + \Delta d_{Long} * \cos(\alpha_{ALD} - \alpha_{Ob}) * \sin(\theta_i)}{\cos(\theta_i)} \quad \text{Gleichung 3}$$

Bei Objekten Ob mit beliebiger Form kann zusätzlich die zwischen den Aufnahmezeitpunkten aufgetretene relative Differenzverformung $\Delta d_{Trans}$ in Querrichtung des zu untersuchenden Objekts Ob zur Berechnung der relativen Vertikalverformung $\Delta d_{Up}$ herangezogen werden und Gleichung 2 zum Einsatz kommen.

Die zwischen den Aufnahmezeitpunkten $t_1$, $t_2$ aufgrund thermischer Effekte auftretende horizontale relative Lageänderung bzw. Verformungskomponente wird erfindungsgemäß bei der Ermittlung der zwischen den Aufnahmezeitpunkten aufgetretenen relativen Differenzverformung $\Delta d_{Long}$ in Längsrichtung des zu untersuchenden Objekts Ob zwischen den, den PS-Punkten entsprechenden, Betrachtungspunkten mit berücksichtigt.

Dazu können beispielsweise Temperaturmessungen und eine Berechnung der thermischen Verschiebung mit physikalischen bzw. ingenieurmäßigen Modellen - z.B. den weiter oben beschriebenen Stabmodellen oder mehrdimensionalen Finite-Element (FE)-Modellen - vorgenommen werden.

Grundsätzlich bestehen bei einem erfindungsgemäßen Verfahren folgende Möglichkeiten zur Ermittlung bzw. Berücksichtigung der Temperatur:

- Zur Berechnung der thermischen horizontalen Verformung zwischen den Betrachtungspunkten $P_1$, $P_2$ kann einerseits die gemessene innere (Struktur-)Temperatur (=Bauwerkstemperatur) herangezogen werden und die zugehörigen Verformungen können mit z.B. einem mechanischen Modell berechnet werden.

- Anstatt der oder zusätzlich zur Verwendung von Temperaturmessdaten der inneren Temperatur des zu untersuchenden Objekts Ob, kann auch ein empirisches Temperaturmodell für die Berechnung der Objekttemperatur aus Daten aus meteorologischen Reanalysen herangezogen werden. Derartige meteorologische Reanalysen verwenden Wetterdaten im Raster von unterschiedlicher Auflösung (z.B. 1 kmx1 km) mit einer zeitlichen Auflösung von mind. 1 h. In dieses Modell gehen z.B. meteorologische Informationen von Lufttemperatur, Sonneneinstrahlung, Sonnenstand, Niederschlag und Wind ein und es werden die zugehörigen zeitlichen Verläufe der Objekttemperatur mit Gleichungen aus [33] berechnet. Die zugehörigen Verformungen können ebenfalls wiederum mit z.B. einem mechanischen/physikalischen bzw. ingenieurmäßigen FE-Modell berechnet werden.

**[0084]** - Weiters zusätzlich oder alternativ dazu kann die horizontale Lageverschiebung bzw. die zwischen den Aufnahmezeitpunkten aufgetretene relative Differenzverformung $\Delta d_{Long}$ in Längsrichtung und/oder die aufgetretene relative Differenzverformung $\Delta d_{Trans}$ in Querrichtung des zu untersuchenden Objekts auch messtechnisch z.B. durch Laserdistanzsensoren direkt gemessen werden.

Die unbekannten horizontalen Objektbewegung $\Delta d_{Long}$ und $\Delta d_{Trans}$ können beispielsweise mit folgenden Methoden a)-c) bestimmt werden:

a) Einfacher modellhafter Zusammenhang bzw. mechanisches Modell: Die relative Bewegung zwischen zwei Betrachtungspunkten $P_1$, $P_2$ in der Längsrichtung, d.h. die relativen Differenzverformung $\Delta d_{Long}$ in Längsrichtung des zu untersuchenden Objekts, ist bei langgestreckten Objekten wie Brücken von der Brückenausdehnung geprägt. In den meisten Fällen kann diese nach folgendem Ansatz bestimmt werden:

$$\Delta d_{Long} = \Delta L * \alpha_b * \Delta T$$

wobei:

$\Delta L$ ist die relative Distanz zwischen den frei gewählten, am zu untersuchenden Objekt Ob befindlichen, betrachteten Messpunkten. Diese Messpunkte sind bei Verwendung von InSAR-Auswertung mit den bereits oben erwähnten Corner Reflektoren eindeutig am Objekt Ob zuordenbar. Werden nur natürliche Persistent Scatterer PS-Punkte angewendet,

ist die Bestimmung der Lagekoordinaten und damit die relative Distanz aufgrund der Pixelgröße von ca. 5x20m entsprechend unschärfer, was jedoch noch immer eine ausreichend hohe Genauigkeit gewährleistet

$\alpha_b$ spezifischer Ausdehnungskoeffizient des jeweiligen Materials, aus Materialtabellen bzw. Materialbibliotheken bekannt,

$\Delta T$ Veränderung der Bauwerkstemperatur zwischen den Aufnahmezeitpunkten $t_1$, $t_2$, bzw. der Lufttemperatur zwischen den Aufnahmezeitpunkten $t_1$, $t_2$. Diese wird entweder als direkt gemessen innere (Bauwerks-)Temperatur oder als Lufttemperatur direkt aus den Wetterdaten verwendet. Diese kann aus Wetterdaten auch berechnet werden, z.B. über ein empirisches Modell oder eine instationäre thermische Berechnung z.B. FEM der Brücke und Kenntnis der Temperaturzeitreihen (z.B. aus Netzwetterdaten stundenweise).

Wie bereits zuvor erwähnt, kann eine Bewegung bzw. eine relative Differenzverformung $\Delta d_{Trans}$ in Querrichtung des zu untersuchenden Objekts in der Regel bei längserstreckten bzw. langgestreckten Bauwerken vernachlässigt werden. Damit folgt die Vereinfachung von Gleichung 2 auf Gleichung 3, wie oben angeführt, wobei $\alpha_{Ob}$ in diesem Fall dem Azimut der Brücke, d.h. dem Winkel $\alpha_{Brücke}$ zwischen der auf eine horizontale Fläche projizierten Längsachse des Objekts und der geographischen Nordrichtung, entspricht.

b) Finite-Elemente (FE)-Modell

Es wird ein Berechnungsmodell erstellt, und die Temperauränderung $\Delta T$ als einwirkende Größe aufgebracht und die thermische Verformung berechnet. Die materialspezifischen Kenngrößen wie z.B. der Ausdehnungskoeffizient $\alpha_b$ werden aus Materialbibliotheken verwendet, die tatsächlichen Randbedingungen/Brückenlager modelliert. Auch lassen sich damit durch Zwangspunkte behinderte Bewegungsverläufe, z.B durch Festlager bei integralen Brücken, besser abbilden. Die gesuchten Größen $\Delta d_{Long}$ und/oder $\Delta d_{Trans}$ zwischen den Betrachtungspunkte werden direkt aus dem Modell entnommen und in Gleichung 2 oder Gleichung 3 eingesetzt.

c) Mittels Distanzsensoren wird die gesuchte thermische Verschiebungsgröße $\Delta d_{Long}$ in Längsrichtung des zu untersuchenden Objekts Ob bzw. $\Delta d_{Trans}$ in Querrichtung des zu untersuchenden Objekts Ob zwischen den Betrachtungspunkten $P_1$, $P_2$ direkt gemessen.

Optional kann vorgelagert noch ein automatisierter Algorithmus zur etwaigen Phasenkorrektur der Messung (siehe Fig. 6a, 6b) zur Bereinigung von Fehlinterpretationen von Phasensprüngen (phase unwrapping) eingesetzt werden, was besonders bei Objekten mit größeren Verformungsänderungen zwischen den Messungen vorteilhaft ist. Das Grundprinzip ist, eine Mehrfachbetrachtung bzw. ein gegenseitiger Abgleich mehrerer Orbitalrichtungen, wobei angenommen wird, dass auftretende Objektverformungen sich grundsätzlich affin zueinander verhalten werden. Diese Annahme gilt vor allem, wenn die Messung bei ähnlichen Temperaturverhältnissen (z.B. gleicher Tageszeit) stattgefunden hat.

Von zumindest zwei O Orbits bzw. Orbitalrichtungen aus wird dabei eine gegenseitige Korrektur der Phasenzahl in Blickrichtung LOS mit statistischen Methoden, z.B. durch eine Schwellwert-Abweichung vom gleitenden Mittelwert der betrachteten Orbits O im Bereich des Bruchteils einer Wellenlänge, durchgeführt. Werte außerhalb des Schwellwertbereichs (in der Regel $\lambda/4$) werden phasenkorrigiert- jeweils um den Wert einer Wellenlänge (entweder addiert bzw. subtrahiert), und es wird anschließend erneut ein gleitender Mittelwert mit den korrigierten Daten gebildet. Dieser Prozess wird iterativ durchlaufen, bis eine bestmögliche Korrektur gefunden wurde und alle Werte innerhalb des Schwellenwertes liegen.

Die damit angepasste Phasenzahl dient zur Rekonstruktion der originalen Laufzeit. Dieser Algorithmus kann mit unterschiedlichen oder gleichen Orbits O anwendet werden- wobei mehrere Orbit-Messungen die Genauigkeit erhöhen. Idealerweise werden Aufnahmen zum gleichen Zeitpunkt oder nur mit geringen zeitlichen Unterschieden herangezogen. Ist die tatsächliche Objektbewegung in der Blickrichtung der Satelliten größer, als der gewählte Schwellwert (definierter Bruchteil der Wellenlänge), so ist die Methode für eine Korrektur geeignet.

Fig. 6a, 6b zeigen in diesem Zusammenhang ein Grundschema der Anwendung der statistischen Korrektur von fehlinterpretierten Phasensprüngen. Gemessen wird die Phasenverschiebung bei zwei Zeitpunkten, wobei der Kreis den Zeitpunkt $t_1$ symbolisiert und das Dreieck den Zeitpunkt $t_2$. Die Phasenzahl ist bei der InSAR-Methode aufgrund der Ungenauigkeit in der Zeitnehmung nur ungefähr bekannt. Bei einer beispielsweise Wellenlängen von $\lambda=5,5$ cm zum Zeitpunkt $t_2$ können bei einer fehlinterpretierten Phasenzahl Abweichungen der Verschiebung um ein ganzzahliges Vielfaches von nx5,5 cm vorliegen (siehe Fig. 6b). Deshalb wird vorzugsweise eine vereinfachte Korrektur durchgeführt und ein Abgleich der Schrägdistanz $d_{LOS}$ (Blickrichtung LOS) von mind. 2 Orbitalrichtung durchgeführt. Bei Abweichungen über dem Schwellwert (einem Bruchteil der Wellenlänge $\lambda$ (z.B. ¼ der Wellenlänge $\lambda$) wird die Distanz entweder um den Wert der Wellenlänge $\lambda$ nach oben oder unten korrigiert. Dies wird iterativ in Schritten wiederholt, bis eine ausreichende Übereinstimmung vorhanden ist.

Fazit:

- Mit einem erfindungsgemäßen Verfahren können örtlich relative Verformungs-/Setzungsunterschiede, d.h. die relativen Vertikalverformungen $\Delta d_{up}$, ermittelt werden, jedoch keine Information über die absolute Lageverschiebung.
- Es wird vorausgesetzt, dass es für die horizontalen Verformungen in der Regel außer der temperaturbedingten Anteile ansonsten keine Lageveränderungen gibt.
- Wenn eine verlässliche Berechnung der horizontalen Bewegung nicht möglich ist, was bei sehr komplexen, statisch mehrfach unbestimmten Tragwerken vorkommen kann, ist eine Bestimmung der horizontalen Verschiebung z.B. durch Messungen erforderlich.
- Die Methode ist nicht rein datenbasiert und erfordert Ingenieurkenntnisse physikalischer Zusammenhänge und vor allem Kenntnis des Tragwerksverhaltens.
- Eine Differenzierung der vertikalen Verformungsanteile in einen thermischen Anteil (z.B. Erwärmung von Pfeiler und Ausdehnung nach oben) und setzungsspezifischen Anteil ist noch zusätzlich vorteilhaft, wie beispielsweise eine klassische bauwerksspezifische Temperaturkompensation. Dies kann analog mit herkömmlichen Messmethoden erfolgen, wie z.B. digitale Schlauchwaagen, die Setzungsdifferenzen aufzeichnen.

Die Vorteile eines erfindungsgemäßen Verfahrens beruhen auf der Tatsache, dass kein Verschneiden mehrerer, verschiedener Orbitalrichtungen mehr notwendig ist, um auf von der sich zeitlich ändernden Schrägdistanz $d_{LOS}$ auf die

vertikale Richtung $d_{up}$ umzurechnen. Des Weiteren ist die Berücksichtigung der Temperatur, z.B. in Form der Bauwerkstemperatur, ein integraler, vorteilhafter Bestandteil der erfindungsgemäßen Methodik bzw. der erfindungsgemäßen Koordinatentransformation.

Daraus resultieren folgende Vorteile:

- Dichtere Zeitreihen, da die InSAR-Messdaten verschiedener Orbitalrichtungen jeweils für sich genutzt werden können und nicht miteinander verschnitten werden müssen.
- Mehr mögliche Betrachtungspunkte auf dem untersuchten Objekt, da die einzelnen möglichen Betrachtungspunkte nicht von jeweils zwei Orbits bzw. Orbitalrichtungen aus gesehen werden müssen, sodass ein erfindungsgemäßes Verfahren auch auf kleinere Brücken anwendbar ist und eine verbesserte Genauigkeit liefert.
- Gesteigerte Genauigkeit, da keine Unschärfen aufgrund von zwischen den verschiedener Aufnahmezeitpunkten aufgetretenen thermischen Effekten mehr vorliegen.
- Keine Einschränkung der Messobjektausrichtung, wohingegen bei bekannten Verfahren derzeit nur Objekte mit ungefährer Ausrichtung in Blickrichtung LOS des Satelliten von dem aus die InSAR-Daten gemessen werden, möglich ist. Bei Nutzung von Sentinel-Satelliten ist bei bekannten Verfahren z.B. eine Ost-West Orientierung des zu untersuchenden Objekts notwendig.

**Ausführungsbeispiel**

Im Folgenden wird ein Ausführungsbeispiel für die Berechnung der relativen Vertikalverformung $\Delta d_{Up}$ einer zu untersuchenden Brücke innerhalb einer Zeitspanne zwischen zeitlich aufeinanderfolgenden Aufnahmezeitpunkten $t_1$, $t_2$ basierend auf von einem Satelliten Sat gemessenen InSAR-Daten angegeben, wobei die Umlaufbahn eine Neigung in Bezug zur Erdachse von ca. 100° gegenüber dem Horizont aufweist.

In dem im Folgenden dargestellten Ausführungsbeispiel ist die Blickrichtung des Satelliten, der die InSAR-Daten aufnimmt, gleich mit der Brückenachse bzw. der Längsachse der Brücke. Dies bedeutet im Ausführungsbeispiel, dass die Brückenachse einen Azimut, d.h. Winkel $\alpha_{Brücke}$ zwischen der auf eine horizontale Fläche projizierten Längsachse der Brücke Objekts und der geographischen Nordrichtung, von 10° aufweist.

Dies vereinfacht die Berechnung, weil die transversale Brückenbewegung, d.h. die relative Differenzverformung $\Delta d_{Trans}$ in Querrichtung der zu untersuchenden Brücke, keinen Einfluss auf die Koordinatentransformation hat und somit vernachlässigt werden kann, was die graphische Darstellung erleichtert und die Erläuterung verständlicher macht. Es werden an einem Objekt, einer Brücke, zwei Betrachtungspunkte $P_1$ und $P_2$ definiert, und die relative vertikale Verformung zwischen den Aufnahmezeitpunkten $t_1$ und $t_2$ gesucht.

Im unten angeführten Ausführungsbeispiel sind eingangs Angaben zum Messobjekt bzw. zu untersuchenden Objekt Ob, einer Brücke, angegeben. Dabei handelt es sich um die Ausrichtung der Brücke $\alpha_{Brücke}$, den, Ausdehnungskoeffizienten des Brückenmaterials Beton $\alpha_c$, und Messpunkte (Entfernung zu Referenzpunkt 1 $\Delta L$).

Anschließend werden die Parameter des Satelliten, von dem aus die Messungen durchgeführt werden, angegeben: Einfallswinkel $\theta$ und Azimut $\alpha_{ALD}$, sowie die vorprozessierte Auswertung aus den InSAR-Analysen: die Verformungen $D_{LOS}$ in Blickrichtung LOS für die zwei betrachteten Punkte $P_1$, $P_2$ zu zwei Zeitpunkten $t_1$ und $t_2$.

Danach folgt für jeden Punkt $P_1$, $P_2$ eine Umrechnung der absolut gemessenen Verformung $d_{LOS}$ in die Differenzverschiebung bzw. die differenziellen Verformungsänderung $\Delta d_{LOS}$ in Bezug auf die gewählte Zeitspanne (in der Regel ist dies die Wiederkehrperiode des Satelliten). Die absolut gemessenen Verformungen $D_{LOS}$ zu den beiden Zeitpunkten $t_1$, $t_2$ werden subtrahiert, um auf die relative Verformungsänderung $\Delta d_{LOS}$ der betrachteten Punkte $P_1$, $P_2$ innerhalb der gewählten Zeitspanne zu kommen.

Fig. 9 zeigt den geometrischen Zusammenhang der Verschiebungskomponenten der gemessen Schrägdistanz $d_{LOS}$ in Blickrichtung LOS in die vektorielle Zerlegung der gesuchten vertikalen Richtung $d_{up\,vertikal}$ und resultierende Längsrichtung $d_{Long}$.

$$\Delta d.up = ? \quad \text{gesuchte relative vertikale Setzung zwischen zwei Punkten}$$

Angaben Brücke

$$\Delta L = 100 \text{ m} \quad \text{relative Distanz zwischen betrachteten Punkten}$$

(fortgesetzt)

$\alpha_{Brücke} := 70\,°$      Azimuth der Brücke

     Ausdehnungskoeffizient für Beton (Literatur)

$$\alpha_c := \frac{10^{-5}}{K}$$

Angaben Satellit

| | |
|---|---|
| $\theta := 38,1\,°$ | Einfallswinkel des Satelliten |
| $\alpha_{ALD} := 80,8\,°$ | Azimuth des Satelliten |
| $d_{los\_Zeit1\_Punkt1} := 0,001\,\mathrm{m} = 1\,\mathrm{mm}$ | LOS für Zeitpunkt 1, Punkt 1 |
| $d_{los\_Zeit2\_Punkt1} := 0,0021\,\mathrm{m} = 2,1\,\mathrm{mm}$ | LOS für Zeitpunkt 2, Punkt 1 |
| $d_{los\_Zeit1\_Punkt2} := 0,0021\,\mathrm{m} = 2,1\,\mathrm{mm}$ | LOS für Zeitpunkt 1, Punkt 2 |
| $d_{los\_Zeit2\_Punkt2} := 0,0071\,\mathrm{m} = 7,1\,\mathrm{mm}$ | LOS für Zeitpunkt 2, Punkt 2 |

Umrechnung

| | |
|---|---|
| $d_{los\_P1} := d_{los\_zeit2\_Punkt1} - d_{los\_Zeit1\_Punkt1} = 1,1\,\mathrm{mm}$ | Punkt 1 |
| $d_{los\_P2} := d_{los\_Zeit2\_Punkt2} - d_{los\_Zeit1\_Punkt2} = 5\,\mathrm{mm}$ | Punkt 2 |
| $\Delta d_{los} := d_{los\_P2} - d_{los\_P1} = 3,9\,\mathrm{mm}$ | Unterschied von LOS zwischen zwei Messtagen und zwei Punkten |

Einfluss der Temperatur

| | |
|---|---|
| $T_1 := 15,1\,°c \qquad T_2 := 17,1\,°C$ | Bauwerkstemperatur für Zeitpunkt 1 und 2 |
| $\Delta T := T_2 - T_1 = 2\,K$ | Temperaturunterschied zwischen zwei Messtagen |
| $\Delta d_{Long} := \alpha_c \cdot \Delta T \cdot \Delta L = 2\,\mathrm{mm}$ | Ingenieurmäßige Bestimmung der Ausdehnung der Brücke zwischen zwei Punkten |
| $\Delta d_{Trans} := 0\,\mathrm{mm}$ | Ingenieurmäßige Bestimmung der Querverformung der Brücke zwischen zwei Punkten |

Umrechnung von LOS ins vertikaler Setzung mit Berücksichtigung von horizontaler Brückenbewegung aufgrund der Temperatur

$$\Delta d_{up} := \frac{\Delta d_{los} + \left(\Delta d_{Long} \cdot \cos\left(\alpha_{ALD} - \alpha_{Brücke}\right) + \Delta d_{Trans} \cdot \sin\left(\alpha_{ALD} - \alpha_{Brücke}\right)\right) \cdot \sin(\theta)}{\cos(\theta)} = 6,4964\,\mathrm{mm}$$

Im nächsten Schritt erfolgt die bauwerksspezifische Temperaturkompensation. Die Änderung der Bauwerkstemperatur $\Delta T$ innerhalb der betrachteten Zeitspanne dient in diesem Beispiel dazu, die Ausdehnung der Brücke in Längsrichtung anhand eines Modells - in diesem Fall eine einfache lineare ingenieurmäßige Gleichung ermittelt aus dem Stabmodel. Die relative Bewegung in der Querrichtung wurde im gezeigten Ausführungsbeispiel vernachlässigt. Damit sind alle benötigten Angaben vorhanden, um aus der absolut gemessenen Verformung $D_{LOS}$ eine vertikale Differenzverformung nach Gleichung 3 der Brücke zu bestimmen.

**Vergleichsversuche**

Ein erfindungsgemäßes Verfahren zur Ermittlung der relativen Vertikalverformung $\Delta d_{Up}$ eines zu untersuchenden Objekts basierend auf InSAR-Daten wurde im Rahmen eines Forschungsprojektes auf eine weitgespannte Autobahnbrücke angewendet und mit einem bereits vorhandenen Messsystem, einer digitalen Schlauchwaage, eines der genauesten Systeme mit dem Differenzsetzungen direkt an Bauwerken gemessen werden können, abgeglichen. Die digitale Schlauchwaage funktioniert nach dem Prinzip des hydrostatischen Ausgleichs von kommunizierenden Gefäßen. Zwei Sensoren werden am Objekt angebracht und mit einem Verbindungsschlauch mit Messflüssigkeit verbunden und die relativen vertikalen Verformungsunterschiede über den Messzeitraum kontinuierlich "digital" aufgezeichnet.

Die Ergebnisse der mit einem erfindungsgemäßen Verfahren ermittelten relativen Vertikalverformung $\Delta d_{Up}$ der zu untersuchenden Brücke sind in Fig. 10a bis Fig. 10d ersichtlich, wobei mit "Ref" die Referenzverformungen, d.h. die Messergebnisse der digitalen Schlauchwaage, markiert sind und mit "InSAR ..." die Auswertungen der Satellitenmessdaten gemessen an den Betrachtungspunkten (in diesem Fall Corner-Reflektoren).

Diese Zeitreihen der relativen Brückenverformungen $d_{up}$, welche hauptsächlich aus sich ändernden Temperaturverformungen der Brücke resultieren, wurden für vier aufgezeichneten Orbits getrennt ausgewertet (in Fig. 10a - Fig. 10d beziehen sich die Angaben InSAR DSC022, DSC124, ASC146 und ASC073 auf die vier Orbits). Ebenso sind die zeitlich zugehörigen Differenzsetzungen gemessen mit der digitalen Schlauchwaage ermittelt worden. Als Temperaturkompensationsmodell für die InSAR-Daten diente ein einfaches Stabmodell, aus dem die relative Differenzverformung $\Delta d_{Long}$ in Längsrichtung des zu untersuchenden Objekts Ob berechnet wurde. Die erzielten Genauigkeiten sind in der Tabelle 1 in der Abhängigkeit von der verwendeten Temperaturkompensation mit Eingangsdaten der Objekttemperatur aus a) vor Ort gemessener Temperatur, b) Lufttemperatur, und c) Bauwerkstemperatur aus oben beschriebenen dem empirischen Modell als Standardabweichung zur Referenz in [mm] zusammengefasst.

Fig. 10a - Fig. 10d zeigen die berechnete relative Vertikalverformung von $\Delta d_{Up}$ zwischen zwei Referenzpunkten (Corner-Reflektoren) am Objekt. Als Referenzwert ist im Diagramm das Ergebnis der digitalen Schlauchwaage strichliert dargestellt (Ref.) und die mit einem erfindungsgemäßen Verfahren berechneten relativen Vertikalverformung der InSAR Daten in durchgehender schwarzer Linie dargestellt (InSAR). Diese Auswertung wurde jeweils für vier verschiedene Orbit-Daten über den Messzeitraum von einem Jahr durchgeführt, und zu den jeweiligen Überflugs-Zeitpunkten der Satelliten ausgewertet. Tabelle 1 vergleicht die Ergebnisse der drei Methoden der Bestimmung der Bauwerkstemperatur für die relative Vertikalverformung von $\Delta d_{Up}$.

Die in Fig. 10a - Fig. 10d und Tabelle 1 dargestellte Genauigkeit der InSAR-Auswertung mit dem erfindungsgemäßen Verfahren im Vergleich zu den Referenzdaten (Schlauchwaage) ist ausreichend für ein ingenieurmäßiges Monitoring der Brücke.

Tabelle 1: Zusammenfassung der Standardabweichung der Abweichungen zwischen $\Delta d_{Up}$ Referenzmesssystem (digitale Schlauchwaage) und $\Delta d_{Up}$ aus InSAR-Daten basierend auf allen vorhandenen Messdaten, und der unter Verwendung unterschiedlicher Bauwerkstemperaturen- zur Temperaturkompensation am Stabmodell. Werte in [mm]

| Orbit | a) Sensor vor Ort | b) Lufttemperatur | c) emp. Modell |
|---|---|---|---|
| DSC022 | 2.4 | 2.8 | 2.1 |
| DSC124 | 2.4 | 3.4 | 2.4 |
| ASC073 | 2.5 | 3.1 | 3.0 |
| ASC146 | 3.6 | 4.4 | 4.2 |
| Mittelwert | **2.7** | **3.5** | **2.9** |

Fig. 11a - Fig. 11d zeigen schließlich noch ein Ausführungsbeispiel einer statistischen Korrektur der Phasensprünge (phase unwrapping), nach dem weiter oben beschrieben Algorithmus. Es werden vorprozessierte LOS-Daten für zwei Descending Orbits DSC022 und DSC124 betrachtet, und jeweils ein gleitender Mittelwert gebildet. Werte außerhalb des Schwellwertbereichs $\lambda/4$ werden phasenkorrigiert - jeweils um den Wert einer Wellenlänge $\lambda$ (entweder addiert bzw. subtrahiert), und erneut ein gleitender Mittelwert gebildet. Dieser Prozess wird mehrmals durchlaufen, bis eine bestmögliche Korrektur gefunden wurde und alle Werte innerhalb des Schwellenwertes liegen (in Fig. 11d erreicht).

Literaturverzeichnis

[1] RVS 13.03.11 (2011) Straßenbrücken: Qualitätssicherung bauliche Erhaltung, Überwachung, Kontrolle und Prüfung von Kunstbauten. FSV - Arbeitsgruppe Brückenbau, Wien. Oktober 2011.

[2] https://www.ots.at/presseaussendung/OTS 20061214 OTS0143/asfinagaltersberabruecke-ist-wieder-fuer-verkehr-freiaeaeben-2

[3] Bretschneider, N., Fiedler, L., Kapphahn, G. and Slowik, V. (2012), Technische Möglichkeiten der Probebelastung von Massivbrücken. Bautechnik, 89: 102-110. https://doi.org/10.1002/bate.201100010

[4] SAMRIS, Sustainable and Advanced Materials for Road In-fraStructure, project ID: GRD2/30228/2000 , 2006: Deliverable D30: "Guidance for the optimal assessment of highway structures. EU- FP5-Projekt

[5] Helmi, K., Taylor, T., Zarafshan, A. & Ansari, F. 2015: Reference free method for real time monitoring of bridge de-flections, Engineering Structures, 103, 116-124. DOI: 10.1016/j.engstruct.2015.09.002

[6] Hester, D., Brownjohn, J., Bocianc, M. & Xu, Y. (2017): Low cost bridge load test: Calculating bridge displacement from acceleration for load assessment calculations, Engineering Structures 143, 358-374. DOI: 10.1016/j.engstruct.2017.04.021

[7] Golser, J. and Steiner, W. (2021), International and European standards for geotechnical monitoring and instrumentation. Geomechanics and Tunnelling, 14: 63-77. https://doi.org/10.1002/geot.202000047

[8] EN_ISO 18674-1 (2015) Allgemeine Regeln- Anhang C.1

[9] VÖBU and SIBS Project partners, 2019. Final Report on SIBS - Saftey asssessment of exiting retaioningwalls; FFG Pro-ject #861163; VÖBU; Vienna.

[10] A. Vorwagner, M. Schlögl, M. Avian, B. Widhalm, C. Honeger, D. Prammer, P. Leopold: "Contactless deformation detection for bridge monitoring: First application of Sentinel-1 radar data in Austria"; Vortrag: IABMAS 2020 10th International Conference on Bridge Maintenance, Safety and Management, 11.04.2021 - 17.04.2021; in: "Bridge Maintenance, Safety, Management, Life-Cycle Sustainability and Innovations - Yokota & Frangopol (eds)", Taylor & Francis, London (2021), ISBN: 978-0-367-23278-8; S. 208 - 214.

[11] Hooper, A., P. Segall, and H. Zebker 2007: Persistent scatterer interferometric synthetic aperture radar for crustal defor-mation analysis, with application to Volcän Alcedo, Galäpagos. Journal of Geophysical Research, 112, B07407

[12] Lange, O., Walter D, Anderssohn J. 2019 Satellite Based Longterm Deformation Monitoring on Dams and its Surroundings. 5 th Conference on Smart Monitoring, Assment and Rehabilitation of Civil Structures, Potsdam. 27 - 29 August 2019 Potsdam, Germany

[13] Barra, A. Monserrat, O. Mazzonti, P., Esposito, C., Cro-setto, M., Scarascia Mugnozza, G. 2016: First insights on the potential of Sentinel-1 for landslides detection. Geomatics, Natural Hazards and Risk. DOI:10.1080/19485805.2016.1171258

[14] M. Lazecky, D. Perissin, M. Bakon, J. M. de Sousa, I. Hlavacova and N. Real, "Potential of satellite InSAR techniques for monitoring of bridge deformations," 2015 Joint Urban Remote Sensing Event (JURSE), Lausanne, Switzerland, 2015, pp. 1-4, doi: 10.1109/JURSE.2015.7120506

[15] S. Selvakumaran et al., "Combined InSAR and Terrestrial Structural Monitoring of Bridges," in IEEE Transactions on Geoscience and Remote Sensing, vol. 58, no. 10, pp. 7141-7153, Oct. 2020, doi: 10.1109/TGRS.2020.2979961.

[16] ESA 2023 https://sentinel.esa.int/ called on 1. Of May 2023

[17] Andrea Nettis, Vincenzo Massimi, Raffaele Nutricato, Davide Oscar Nitti, Sergio Samarelli, Giuseppina Uva, Satellite-based interferometry for monitoring structural deformations of bridge portfolios, Automation in Construction, Volume 147, 2023, 104707, ISSN 0926-5805, https://doi.org/10.1016/j.autcon.2022.104707.

[18] G. Fornaro, D. Reale, S. Verde, Bridge thermal dilation monitoring with millimeter sensitivity via multidimensional SAR imaging IEEE Geosci. Remote Sens. Lett., 10 (2013), pp. 677-681, 10.1109/LGRS.2012.2218214

[19] M. Crosetto, O. Monserrat, M. Cuevas-Gonzälez, N. Devanthéry, G. Luzi, B. Crippa, Measuring thermal expansion using X-band persistent scatterer interferometry. ISPRS J. Photogramm. Remote Sens., 100 (2015), pp. 84-91, 10.1016/j.isprsjprs.2014.05.006

[20] P. Ma, T. Li, C. Fang, H. Lin, A tentative test for measuring the sub-millimeter settlement and uplift of a high-speed railway bridge using COSMO-SkyMed images. ISPRS J. Photogramm. Remote Sens., 155 (2019), pp. 1-12, 10.1016/j.isprsjprs.2019.06.013

[21] M. Lazecky, D. Perissin, M. Bakon, J.M. De Sousa, I. Hlavacova, N. Real,Potential of satellite InSAR techniques for monitoring of bridge deformations. 2015 Joint Urban Remote Sensing Event, JURSE 2015 (2015), 10.1109/JURSE.2015.7120506

[22] M. Lazecky, I. Hlavacova, M. Bakon, J.J. Sousa, D. Perissin, G. Patricio, Bridge displacements monitoring using space-borne X-band SAR interferometry. IEEE J. Sel. Top. Appl. Earth Obs. Remote Sens., 10 (1) (2016), pp. 205-210, 10.1109/JSTARS.2016.2587778.

[23] Q. Huang, M. Crosetto, O. Monserrat, B. Crippa, Displacement monitoring and modelling of a high-speed railway bridge using C-band Sentinel-1 data. ISPRS J. Photogramm. Remote Sens., 128 (2017), pp. 204-211, 10.1016/j.isprsjprs.2017.03.016

[24] Q. Huang, O. Monserrat, M. Crosetto, B. Crippa, Y. Wang, J. Jiang, Y. Ding, Displacement monitoring and health evaluation of two bridges using sentinel-1 SAR images. Remote Sens., 10 (11) (2018), 10.3390/rs10111714

[25] J. Jung, D.J. Kim, S.K.P. Vadivel, S.H. Yun, Long-term deflection monitoring for bridges using X and C-band time-series SAR interferometry. Remote Sens., 11 (11) (2019), 10.3390/rs11111258

[26] D. Cusson, K. Trischuk, D. Hébert, G. Hewus, M. Gara, P. Ghuman, Satellite-based InSAR monitoring of highway bridges: validation case study on the north channel bridge in Ontario, Canada. Transp. Res. Rec., 2672 (45) (2018), pp. 76-86, 10.1177/0361198118795013

[27] D. Cusson, C. Rossi, I.F. Ozkan, Early warning system for the detection of unexpected bridge displacements from radar satellite data. J. Civ. Struct. Heal. Monit., 11 (1) (2021), pp. 189-204, 10.1007/s13349-020-00446-9

[28] O. Markogiannaki, H. Xu, F. Chen, S.A. Mitoulis, I. Parcharidis, Monitoring of a landmark bridge using SAR interferometry coupled with engineering data and forensics. Int. J. Remote Sens., 43 (1) (2022), pp. 95-119, 10.1080/01431161.2021.2003468

[29] P. Giordano, Z. Turksezer, M. Previtali, M. Limongelli, Damage detection on a historic iron bridge using satellite DInSAR data. Struct. Health Monit., 21 (5) (2022), pp. 2291-2311, 10.1177/14759217211054350

[30] Vilardo, G. & Guido, Ventura & Terranova, Carlo & Matano, Fabio & nardò, Sergio. (2009). Ground deformation due to tectonic, hydrothermal, gravity, hydrogeological, and anthropic processes in the Campania Region (Southern Italy) from Permanent Scatterers Synthetic Aperture Radar Interferometry. Remote Sensing of Environment. 113. 197-212. 10.1016/j.rse.2008.09.007.

[31] Xiaoxuan Yin, M. Sc. & Prof. Dr. Wolfgang Busch: Nutzung der Sentinel-1 Aufnahmekongurationen zur Ableitung von Bodenbewegungskomponenten im Rahmen eines radarinterferometrischen Bodenbewegungsmonitorings. Tagungsband GeoMonitoring 2018.

[32] Ralbovsky Marian, K. M. (2022). VerBewlng: Bewertung von Ingenieurtragwerken.

## Patentansprüche

1. Verfahren zur Ermittlung der relativen Vertikalverformung $\Delta d_{up}$ eines zu untersuchenden Objekts (Ob), insbesondere eines Bauwerks, vorzugsweise einer Brücke, innerhalb einer Zeitspanne zwischen zeitlich aufeinanderfolgenden Aufnahmezeitpunkten ($t_1$, $t_2$) basierend auf von zumindest einem Flugobjekt gemessenen Interferometric Synthetic Aperture Radar (InSAR-)Daten,

   - wobei sich das zumindest eine Flugobjekt auf einer Flugbahn in einer Flugrichtung wiederholt in zeitlichem Abstand über das zu untersuchende Objekt (Ob) bewegt und währenddessen entlang einer Blickrichtung (LOS) InSAR-Daten aufnimmt,
   - wobei basierend auf den aufgenommenen InSAR-Daten Interferogramme erstellt werden, und
   - wobei zumindest zwei Persistent Scatterer (PS-)Punkte ($P_1$, $P_2$) auf dem zu untersuchenden Objekt (Ob) als Pixel ermittelt werden, die über eine Folge von Interferogrammen kohärent bleiben,

   umfassend die folgenden Schritte:

   - Ermitteln der Veränderung der Phase in Blickrichtung (LOS) mit dem zugehörigen Einfallswinkel $\theta_i$ zwischen der Blickrichtung (LOS) und der Nadirrichtung (Nad) und dem zugehörigen Winkel $\alpha_{ALD}$ zwischen der auf eine horizontale Fläche projizierten Blickrichtung (LOS) und der geographischen Nordrichtung (N) für die zumindest zwei PS-Punkte auf dem zu untersuchenden Objekt (Ob) basierend auf zu zumindest zwei Aufnahmezeitpunkten ($t_1$, $t_2$) erstellten Interferogrammen,
   - Ableiten der differenziellen Verformungsänderung $\Delta d_{LOS}$ des zu untersuchenden Objekts (Ob) in der Blickrichtung (LOS) des Flugobjekts zwischen den Aufnahmezeitpunkten ($t_1$, $t_2$) basierend auf der ermittelten Veränderung der Phase, insbesondere nach Korrektur von Fehlern bedingt durch Phasensprünge,
   - Durchführen einer Koordinatentransformation der differenziellen Verformungsänderung $\Delta d_{LOS}$ in die Richtung des zu untersuchenden Objekts (Ob), wobei die horizontalen Bewegungskomponenten ($\Delta d_E$, $\Delta d_N$) der differenziellen Verformungsänderung $\Delta d_{LOS}$ auf die Längs- und die Querrichtung des zu untersuchenden Objekts (Ob) projiziert werden, insbesondere unter Heranziehung des Winkel $\alpha_{Ob}$ zwischen der auf eine horizontale Fläche projizierten Längsachse des Objekts und der geographischen Nordrichtung,
   - Ermittlung der Temperatur, insbesondere der Temperatur des zu untersuchenden Objekts (Ob), insbesondere als Schätzwert und/oder durch Messung,
   - Ermittlung der zwischen den Aufnahmezeitpunkten ($t_1$, $t_2$) aufgetretenen relativen Differenzverformung $\Delta d_{Long}$ in Längsrichtung des zu untersuchenden Objekts (Ob) zwischen den, den PS-Punkten entsprechenden, Betrachtungspunkten ($P_1$, $P_2$) auf dem zu untersuchenden Objekt (Ob) unter Berücksichtigung der ermittelten Temperatur, und
- Berechnung der relativen Vertikalverformung $\Delta d_{Up}$ des zu untersuchenden Objekts (Ob) zwischen den Aufnahmezeitpunkten ($t_1$, $t_2$) unter Heranziehung der zuvor ermittelten relativen Differenzverformung $\Delta d_{Long}$ in Längsrichtung und der differenziellen Verformungsänderung $\Delta d_{LOS}$.

2. Verfahren nach Anspruch 1, **dadurch gekennzeichnet,**

- **dass** die zwischen den Aufnahmezeitpunkten ($t_1$, $t_2$) aufgetretene relative Differenzverformung $\Delta d_{Trans}$ in Querrichtung des zu untersuchenden Objekts (Ob) zwischen den, den PS-Punkten entsprechenden, Betrachtungspunkten ($P_1$, $P_2$) auf dem zu untersuchenden Objekt (Ob) unter Berücksichtigung der ermittelten Temperatur ermittelt wird und
- **dass** bei der Berechnung der relativen vertikalen Differenzverformung $\Delta d_{up}$ des zu untersuchenden Objekts (Ob) zwischen den Aufnahmezeitpunkten ($t_1$, $t_2$) zusätzlich die relative Differenzverformung $\Delta d_{Trans}$ in Querrichtung herangezogen wird.

3. Verfahren nach Anspruch 1 oder 2, **dadurch gekennzeichnet, dass** zur Ermittlung der Temperatur die innere Temperatur des zu untersuchenden Objekts (Ob) gemessen wird.

4. Verfahren nach einem der vorangehenden Ansprüche, **dadurch gekennzeichnet, dass** zur Ermittlung der Temperatur die Lufttemperatur in Bereich des zu untersuchenden Objekts (Ob) gemessen und/oder aus Wetterdaten abgeleitet wird.

5. Verfahren nach einem der vorangehenden Ansprüche, **dadurch gekennzeichnet, dass** zur Ermittlung der Temperatur ein empirisches Temperaturmodell zur Ableitung der inneren Temperatur des zu untersuchenden Objekts (Ob) basierend auf Netzwetterdaten herangezogen wird.

6. Verfahren nach einem der vorangehenden Ansprüche, **dadurch gekennzeichnet, dass** zur Ermittlung der relativen Differenzverformung $\Delta d_{Long}$ in Längsrichtung des zu untersuchenden Objekts (Ob) die thermische Verformung zwischen den, den PS-Punkten entsprechenden, Betrachtungspunkten ($P_1$, $P_2$) auf dem zu untersuchenden Objekt (Ob) unter Berücksichtigung der Temperatur, insbesondere der inneren Temperatur des zu untersuchenden Objekts (Ob), mit einem mechanischen Modell berechnet wird.

7. Verfahren nach einem der vorangehenden Ansprüche, insbesondere nach Anspruch 6, **dadurch gekennzeichnet, dass** zur Ermittlung der relativen Differenzverformung $\Delta d_{Long}$ in Längsrichtung des zu untersuchenden Objekts (Ob) und/oder zur Kalibration des gemäß Anspruch 6 verwendeten mechanischen Modells die Lageverschiebung zwischen den, den PS-Punkten entsprechenden, Betrachtungspunkten ($P_1$, $P_2$) auf dem zu untersuchenden Objekt (Ob) messtechnisch, insbesondere durch Laserdistanzmessung, ermittelt wird.

8. Verfahren nach einem der vorangehenden Ansprüche, **dadurch gekennzeichnet, dass** vor dem Ableiten der differenziellen Verformungsänderung $\Delta d_{LOS}$ des zu untersuchenden Objekts zur Korrektur von Fehlern bedingt durch Phasensprünge eine Korrektur der Phasenzahl in Blickrichtung (LOS) des Flugobjekts, insbesondere eine Korrektur mit statistischen Methoden, vorzugsweise ein phase unwrapping, für die zumindest zwei PS-Punkte auf dem zu untersuchenden Objekt (Ob) basierend auf zumindest zwei zu annähernd gleichem Aufnahmezeitpunkt, insbesondere entlang derselben Blickrichtung (LOS), aufgenommen InSAR-Datensätzen vorgenommen wird, wobei insbesondere vorgesehen ist,

dass sich zumindest ein weiteres Flugobjekt auf einer weiteren Flugbahn in einer weiteren, zur Flugrichtung des Flugobjekts entgegengesetzten, Flugrichtung wiederholt in zeitlichem Abstand über das zu untersuchende Objekt (Ob) bewegt und währenddessen entlang einer weiteren Blickrichtung ($LOS_D$) InSAR-Daten aufnimmt, und
dass zur Korrektur der Phasenzahl in Blickrichtung (LOS) des Flugobjekts für die zumindest zwei PS-Punkte auf dem zu untersuchenden Objekt von dem sich auf der weiteren Flugbahn in der weiteren, entgegengesetzten, Flugrichtung bewegenden weiteren Flugobjekt entlang der weiteren Blickrichtung ($LOS_D$) zu annähernd gleichem Aufnahmezeitpunkt aufgenommene InSAR-Daten herangezogen werden.

9. Verfahren nach einem der vorangehenden Ansprüche, **dadurch gekennzeichnet, dass** die horizontalen Bewegungskomponenten ($\Delta d_E$, $\Delta d_N$) der differenziellen Verformungsänderung $\Delta d_{LOS}$ auf die Längs- und die Querrichtung des zu untersuchenden Objekts (Ob) projiziert werden gemäß

$$\Delta d_{Long} = \Delta d_E * cos(\alpha_{ALD} - \alpha_{Ob})$$

$$\Delta d_{Trans} = \Delta d_N * sin(\alpha_{ALD} - \alpha_{Ob})$$

10. Verfahren nach einem der vorangehenden Ansprüche, **dadurch gekennzeichnet, dass** die relative Vertikalverformung $\Delta d_{Up}$ berechnet wird nach

$$\Delta d_{up} = \frac{\Delta d_{LOS} + \Delta d_{Long} * cos(\alpha_{ALD} - \alpha_{Ob}) * sin(\theta_i)}{cos(\theta_i)}$$

11. Verfahren nach einem der vorangehenden Ansprüche, **dadurch gekennzeichnet, dass** die relative Vertikalverformung $\Delta d_{Up}$ berechnet wird nach

$$\Delta d_{up} = \frac{\Delta d_{LOS} + \left(\Delta d_{Long} * cos(\alpha_{ALD} - \alpha_{Ob}) + \Delta d_{Trans} * sin(\alpha_{ALD} - \alpha_{Ob})\right) * sin(\theta_i)}{cos(\theta_i)}$$

12. Verfahren nach einem der vorangehenden Ansprüche, **dadurch gekennzeichnet, dass** die relative Differenzverformung $\Delta d_{Long}$ in Längsrichtung des zu untersuchenden Objekts (Ob) berechnet wird nach

$$\Delta d_{Long} = \Delta L * \alpha_b * \Delta T$$

wobei $\Delta L$ der relativen Distanz zwischen den, den PS-Punkten entsprechenden, Betrachtungspunkten (P$_1$, P$_2$) auf dem zu untersuchenden Objekt (Ob), $\alpha_b$ dem spezifischen Ausdehnungskoeffizient des zu untersuchenden Objekts (Ob) und $\Delta T$ der Veränderung der inneren Temperatur des zu untersuchenden Objekts und/oder der Lufttemperatur im Bereich des zu untersuchenden Objekts (Ob) zwischen den Aufnahmezeitpunkten (t$_1$, t$_2$) entspricht.

13. Verfahren nach einem der vorangehenden Ansprüche, **dadurch gekennzeichnet, dass** zur Ermittlung der relativen Differenzverformung $\Delta d_{Long}$ in Längsrichtung und/oder zur Ermittlung der relativen Differenzverformung $\Delta d_{Trans}$ in Querrichtung ein Modell, insbesondere ein Finite-Elemente-Modell, erstellt und die relative Differenzverformung $\Delta d_{Long}$ in Längsrichtung und/oder die relative Differenzverformung $\Delta d_{Trans}$ in Querrichtung unter Berücksichtigung des spezifischen Ausdehnungskoeffizient $\alpha_b$ des zu untersuchenden Objekts (Ob) und der Veränderung der inneren Temperatur des zu untersuchenden Objekts (Ob) und/oder der Lufttemperatur im Bereich des zu untersuchenden Objekts (Ob) zwischen den Aufnahmezeitpunkten (t$_1$, t$_2$) modelliert werden.

14. Verfahren nach einem der vorangehenden Ansprüche, **dadurch gekennzeichnet, dass** vor der Ermittlung der PS-Punkte

- eine Korrektur, insbesondere eine ellipsoidische, topografische, verformungsabhängige und/oder atmosphärische Korrektur, der aufgenommenen InSAR-Daten vorgenommen wird und/oder
- weitere Signalverarbeitungsschritte auf die erstellten Interferogramme angewandt werden.

Fig. 1

Fig. 2

Fig. 3

Fig. 4

Fig. 5

Fig. 6a  ● ... $t_1$
▲ ... $t_2$

Fig. 6b

Fig. 9

Fig. 7a

Fig. 7b

Fig. 8a

Fig. 8b

Fig. 10a

Fig. 10b

Fig. 10c

Fig. 10d

Fig. 11a

Fig. 11b

Fig. 11c

Fig. 11d

Europäisches
Patentamt

European
Patent Office

Office européen
des brevets

# EUROPÄISCHER RECHERCHENBERICHT

**Nummer der Anmeldung**

EP 24 17 5895

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | LAZECKY MILAN ET AL: "Bridge Displacements Monitoring Using Space-Borne X-Band SAR Interferometry", IEEE JOURNAL OF SELECTED TOPICS IN APPLIED EARTH OBSERVATIONS AND REMOTE SENSING, IEEE, USA, Bd. 10, Nr. 1, 1. Januar 2017 (2017-01-01), Seiten 205-210, XP011637872, ISSN: 1939-1404, DOI: 10.1109/JSTARS.2016.2587778 [gefunden am 2016-12-21] * Abbildungen 1, 5 * * Seite 206, linke Spalte, Zeilen 2-4 * * Seite 206, linke Spalte, Zeile 41 - Seite 207, linke Spalte, Zeile 45 * * Seite 208, linke Spalte, Zeile 6 - Seite 209, linke Spalte, Zeile 8 * * Seite 209, rechte Spalte, Zeilen 5-17 * ----- | 1-14 | INV. G01S13/90 |
| Y | CN 111 487 622 A (CHINA SOUTHERN POWER GRID CO) 4. August 2020 (2020-08-04) * das ganze Dokument * ----- | 1-14 | **RECHERCHIERTE SACHGEBIETE (IPC)** G01S |
| A | DI MARTINO GERARDO ET AL: "Railway Bridge Monitoring with Sar: A Case Study", IGARSS 2018 - 2018 IEEE INTERNATIONAL GEOSCIENCE AND REMOTE SENSING SYMPOSIUM, IEEE, 22. Juli 2018 (2018-07-22), Seiten 2952-2955, XP033436517, DOI: 10.1109/IGARSS.2018.8517343 [gefunden am 2018-10-31] * Abbildungen 1-5 * * Seite 2953, linke Spalte, Zeile 16 - rechte Spalte, Zeile 17 * * Seite 2953, rechte Spalte, Zeilen 16-24 * ----- | 1-14 | |

Der vorliegende Recherchenbericht wurde für alle Patentansprüche erstellt

| Recherchenort | Abschlußdatum der Recherche | Prüfer |
|---|---|---|
| München | 7. Oktober 2024 | Rodríguez González |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 17 5895

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-10-2024

| Im Recherchenbericht angeführtes Patentdokument | Datum der Veröffentlichung | Mitglied(er) der Patentfamilie | Datum der Veröffentlichung |
|---|---|---|---|
| CN 111487622 A | 04-08-2020 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- RVS 13.03.11 (2011) Straßenbrücken: Qualitätssicherung bauliche Erhaltung. *Überwachung, Kontrolle und Prüfung von Kunstbauten. FSV - Arbeitsgruppe Brückenbau,* Oktober 2011
- **BRETSCHNEIDER, N. ; FIEDLER, L ; KAPPHAHN, G ; SLOWIK, V.** Technische Möglichkeiten der Probebelastung von Massivbrücken. *Bautechnik,* 2012, vol. 89, 102-110, https://doi.org/10.1002/bate.201100010
- **SAMRIS.** Sustainable and Advanced Materials for Road In-fraStructure, project ID: GRD2/30228/2000 , 2006: Deliverable D30. *Guidance for the optimal assessment of highway structures. EU- FP5-Projekt*
- **HELMI, K ; TAYLOR, T. ; ZARAFSHAN, A ; ANSARI, F.** *Reference free method for real time monitoring of bridge de-flections, Engineering Structures,* 2015, vol. 103, 116-124
- **HESTER, D. ; BROWNJOHN, J. ; BOCIANC, M. ; XU, Y.** Low cost bridge load test: Calculating bridge displacement from acceleration for load assessment calculations. *Engineering Structures,* 2017, vol. 143, 358-374
- **GOLSER, J. ; STEINER, W.** International and European standards for geotechnical monitoring and instrumentation. *Geomechanics and Tunnelling,* 2021, vol. 14, 63-77, https://doi.org/10.1002/geot.202000047
- VÖBU and SIBS Project partners. *Final Report on SIBS - Saftey asssessment of exiting retaioningwalls; FFG Pro-ject #861163; VÖBU; Vienna,* 2019
- Contactless deformation detection for bridge monitoring: First application of Sentinel-1 radar data in Austria. **A. VORWAGNER ; M. SCHLÖGL ; M. AVIAN ; B. WIDHALM ; C. HONEGER ; D. PRAMMER ; P. LEOPOLD.** Vortrag: IABMAS 2020 10th International Conference on Bridge Maintenance, Safety and Management, 11.04.2021 - 17.04.2021; in: ''Bridge Maintenance, Safety, Management, Life-Cycle Sustainability and Innovations. Taylor & Francis, 2021, 208-214
- **HOOPER, A ; P. SEGALL ; H. ZEBKER.** Persistent scatterer interferometric synthetic aperture radar for crustal defor-mation analysis, with application to Volcän Alcedo, Galäpagos. *Journal of Geophysical Research,* 2007, vol. 112, B07407
- **LANGE, O. ; WALTER D ; ANDERSSOHN J.** Satellite Based Longterm Deformation Monitoring on Dams and its Surroundings. *5 th Conference on Smart Monitoring, Assment and Rehabilitation of Civil Structures,* 2019
- **BARRA, A ; MONSERRAT, O ; MAZZONTI, P. ; ESPOSITO, C ; CRO-SETTO, M. ; SCARASCIA MUGNOZZA, G.** First insights on the potential of Sentinel-1 for landslides detection. *Geomatics, Natural Hazards and Risk,* 2016
- **M. LAZECKY ; D. PERISSIN ; M. BAKON ; J. M. DE SOUSA ; I. HLAVACOVA ; N. REAL.** Potential of satellite InSAR techniques for monitoring of bridge deformations. *2015 Joint Urban Remote Sensing Event (JURSE), Lausanne, Switzerland,* 2015, 1-4
- **S. SELVAKUMARAN et al.** Combined InSAR and Terrestrial Structural Monitoring of Bridges. *in IEEE Transactions on Geoscience and Remote Sensing,* Oktober 2020, vol. 58 (10), 7141-7153
- *ESA 2023,* Mai 2023, https://sentinel.esa.int
- **ANDREA NETTIS ; VINCENZO MASSIMI ; RAFFAELE NUTRICATO ; DAVIDE OSCAR NITTI ; SERGIO SAMARELLI ; GIUSEPPINA UVA.** Satellite-based interferometry for monitoring structural deformations of bridge portfolios. *Automation in Construction,* 2023, vol. 147, ISSN 0926-5805, 104707, https://doi.org/10.1016/j.autcon.2022.104707.
- **G. FORNARO ; D. REALE ; S. VERDE.** Bridge thermal dilation monitoring with millimeter sensitivity via multidimensional SAR imaging IEEE Geosci. *Remote Sens. Lett.,* 2013, vol. 10, 677-681
- **M. CROSETTO ; O. MONSERRAT ; M. CUEVAS-GONZÄLEZ ; N. DEVANTHÉRY ; G. LUZI ; B. CRIPPA.** Measuring thermal expansion using X-band persistent scatterer interferometry. *ISPRS J. Photogramm. Remote Sens.,* 2015, vol. 100, 84-91
- **P. MA ; T. LI ; C. FANG ; H. LIN.** A tentative test for measuring the sub-millimeter settlement and uplift of a high-speed railway bridge using COSMO-SkyMed images. *ISPRS J. Photogramm. Remote Sens.,* 2019, vol. 155, 1-12
- **M. LAZECKY ; D. PERISSIN ; M. BAKON ; J.M. DE SOUSA ; I. HLAVACOVA ; N. REAL.** Potential of satellite InSAR techniques for monitoring of bridge deformations. *2015 Joint Urban Remote Sensing Event, JURSE 2015,* 2015

- **M. LAZECKY ; I. HLAVACOVA ; M. BAKON ; J.J. SOUSA ; D. PERISSIN ; G. PATRICIO.** Bridge displacements monitoring using space-borne X-band SAR interferometry. *IEEE J. Sel. Top. Appl. Earth Obs. Remote Sens.,* 2016, vol. 10 (1), 205-210
- **Q. HUANG ; M. CROSETTO ; O. MONSERRAT ; B. CRIPPA.** Displacement monitoring and modelling of a high-speed railway bridge using C-band Sentinel-1 data. *ISPRS J. Photogramm. Remote Sens.,* 2017, vol. 128, 204-211
- **Q. HUANG ; O. MONSERRAT ; M. CROSETTO ; B. CRIPPA ; Y. WANG ; J. JIANG ; Y. DING.** Displacement monitoring and health evaluation of two bridges using sentinel-1 SAR images. *Remote Sens.,* 2018, vol. 10 (11
- **J. JUNG ; D.J. KIM ; S.K.P. VADIVEL ; S.H. YUN.** Long-term deflection monitoring for bridges using X and C-band time-series SAR interferometry. *Remote Sens.,* 2019, vol. 11 (11
- **D. CUSSON ; K. TRISCHUK ; D. HÉBERT ; G. HEWUS ; M. GARA ; P. GHUMAN.** Satellite-based InSAR monitoring of highway bridges: validation case study on the north channel bridge in Ontario, Canada. *Transp. Res. Rec.,* 2018, vol. 2672 (45), 76-86
- **D. CUSSON ; C. ROSSI ; I.F. OZKAN.** Early warning system for the detection of unexpected bridge displacements from radar satellite data. *J. Civ. Struct. Heal. Monit.,* 2021, vol. 11 (1), 189-204
- **O. MARKOGIANNAKI ; H. XU ; F. CHEN ; S.A. MITOULIS ; I. PARCHARIDIS.** Monitoring of a landmark bridge using SAR interferometry coupled with engineering data and forensics. *Int. J. Remote Sens.,* 2022, vol. 43 (1), 95-119
- **P. GIORDANO ; Z. TURKSEZER ; M. PREVITALI ; M. LIMONGELLI.** Damage detection on a historic iron bridge using satellite DInSAR data. *Struct. Health Monit.,* 2022, vol. 21 (5), 2291-2311
- **VILARDO, G ; GUIDO ; VENTURA ; TERRANOVA ; CARLO ; MATANO ; FABIO ; NARDÒ, SERGIO.** Ground deformation due to tectonic, hydrothermal, gravity, hydrogeological, and anthropic processes in the Campania Region (Southern Italy) from Permanent Scatterers Synthetic Aperture Radar Interferometry. *Remote Sensing of Environment,* 2009, vol. 113, 197-212
- **XIAOXUAN YIN ; M. SC. ; PROF. DR. WOLFGANG BUSCH.** Nutzung der Sentinel-1 Aufnahmekongurationen zur Ableitung von Bodenbewegungskomponenten im Rahmen eines radarinterferometrischen Bodenbewegungsmonitorings. *Tagungsband Geo-Monitoring,* 2018
- **RALBOVSKY MARIAN, K. M.** *VerBewlng: Bewertung von Ingenieurtragwerken,* 2022